# EUROPEAN PATENT APPLICATION

(11) **EP 4 794 372 A1**
(43) Date of publication of application: **19.08.2026**
(21) Application number: 24884726.1
(22) Date of filing: 29.10.2024
(51) Int. Cl.: H04W 24/02

(54) **COMMUNICATION METHOD, APPARATUS AND SYSTEM**

(30) Priority: 03.11.2023 CN 202311464430
(71) Applicant: HUAWEI TECHNOLOGIES CO., LTD., Shenzhen 518129 (CN)
(72) Inventor: WANG, Yan, Shenzhen, Guangdong 518129 (CN); ZHANG, Yongjing, Shenzhen, Guangdong 518129 (CN); YIN, Yu, Shenzhen, Guangdong 518129 (CN); ZHANG, Jidong, Shenzhen, Guangdong 518129 (CN)
(74) Representative: Gill Jennings & Every LLP
(86) International application number: PCT/CN2024/128121
(87) International publication number: WO 2025/092723

(57) **Abstract**

This application relates to the field of communication technologies, and provides a communication method, apparatus, and system. The method is applied to a first network element, and includes: receiving first information from a terminal device, where the first information describes an intent; obtaining a capability and a capability invoking method of at least one object, where the capability of the at least one object is related to the intent; determining an information exchange method between the first network element and the at least one object based on the capability and the capability invoking method of the at least one object, where the information exchange method is for implementing the intent; and invoking the capability of the at least one object based on the information exchange method. According to the communication method provided in embodiments of this application, the intent sent by the terminal device can be translated into a specific service procedure or task orchestration policy, and an object having a suitable capability is invoked and driven to implement the intent, to reduce internal procedure design complexity of the communication system.

## Description

### CROSS-REFERENCE TO RELATED APPLICATIONS

This application claims priority to Chinese Patent Application No. 202311464430.4, filed with the China National Intellectual Property Administration on November 3, 2023 and entitled "COMMUNICATION METHOD, APPARATUS, AND SYSTEM", which is incorporated herein by reference in its entirety.

### TECHNICAL FIELD

Embodiments of this application relate to the field of communication technologies, and more specifically, to a communication method, apparatus, and system.

### BACKGROUND

Resources and capabilities of new dimensions such as computing, intelligence, data, and sensing are added to a 6th generation (6th generation, 6G) system based on connection enhancement. The 6G system is no longer a pure channel, but provides platform-based service capabilities, to achieve intelligent connectivity of everything.

However, enhanced evolution based on an existing mobile network protocol system causes accumulation of complexity of system design and implementation, which is unsustainable. A main reason lies in that an existing network system architecture is defined based on a standard signaling procedure. Design complexity of the architecture system and the signaling procedure depends on a quantity of service scenarios, a quantity of service procedures in each scenario, and a quantity of network functions in each service procedure. As types and quantities of objects participating in interaction in a communication system increase, a conventional end-to-end signaling procedure customization mode causes problems such as a large quantity of signaling types, complex logic, a long version iteration cycle, and poor scalability.

### SUMMARY

Embodiments of this application provide a communication method and apparatus, to reduce internal procedure design complexity of a communication system.

According to a first aspect, a communication method is provided. The method may be performed by a first network element, or may be performed by a module (for example, a chip or a circuit) in the first network element, or may be performed by a logical node, a logical module, or software that can implement all or some functions of the first network element. This is not limited in this application.

The method includes: receiving first information from a terminal device, where the first information describes an intent; obtaining a capability and a capability invoking method of at least one object, where the capability of the at least one object is related to the intent; determining an information exchange method between the first network element and the at least one object based on the capability and the capability invoking method of the at least one object, where the information exchange method is for implementing the intent; and invoking the capability of the at least one object based on the information exchange method.

Optionally, the first network element may be a network intelligent agent function (network intelligent agent function, NIAF).

According to the technical solution provided in this application, only a manner of invoking a capability of each object needs to be defined in a network, and a scenario and a service procedure are automatically generated by the first network element, to reduce internal procedure design complexity. In addition, the terminal device interacts with the NIAF through an intent-based interface, and the first network element translates the intent into a service procedure in the network, to reduce learning costs of using the network by a terminal.

With reference to the first aspect, in some implementations of the first aspect, obtaining the capability and the capability invoking method of the at least one object includes: sending a first message to a second network element, where the first message is for requesting the capability and the capability invoking method of the at least one object, and the first message includes an identifier of the at least one object; and receiving the capability and the capability invoking method of the at least one object from the second network element.

Optionally, the second network element may be a registration function (registration function, RF).

According to the foregoing technical solution, provided that the first network element and the second network element interact with each other, an intent description can be translated into an information exchange procedure that can implement the intent, so that intent translation efficiency is improved.

According to a second aspect, a communication method is provided. The method may be performed by a first network element, or may be performed by a module (for example, a chip or a circuit) in the first network element, or may be performed by a logical node, a logical module, or software that can implement all or some functions of the first network element. This is not limited in this application.

The method includes: receiving first information from a terminal device, where the first information describes an intent; sending second information to a third network element, where the second information describes the intent; receiving third information from the third network element, where the third information indicates an information exchange method between the first network element and at least one object, the information exchange method is for implementing the intent, and the information exchange method is determined based on a capability and a capability invoking method of the at least one object; and invoking the capability of the at least one object based on the information exchange method.

Optionally, the third network element may be an intent knowledge base (intent knowledge base, IKB).

According to the technical solution provided in this application, the first network element requests the third network element to assist in identifying and translating the intent, so that the first network element can directly obtain the information exchange method returned by the third network element, thereby saving computational power of the first network element, and the saved computational power is used for executing another task of the first network element, thereby improving overall working efficiency of a communication system.

With reference to the second aspect, in some implementations of the second aspect, the method further includes: updating a local intent knowledge base in the first network element based on the intent and the information exchange method, where the local intent knowledge base is for determining an information exchange method corresponding to an intent.

According to the foregoing technical solution, the first network element can continuously perform learning based on generated data in an actual working process, to automatically adapt to a new intent and/or a capability of a new object, and a service scenario that can be covered by intent translation and accuracy can be improved without an interface and a procedure upgrade. In addition, after the local knowledge base is updated, the first network element can directly translate a same or similar intent encountered in subsequent work without using the third network element, to improve intent translation efficiency.

With reference to the first aspect or the second aspect, in some implementations of the first aspect or the second aspect, invoking the capability of the at least one object based on the information exchange method includes: sending, to at least a part of the at least one object, information describing a sub-intent of the intent.

According to the foregoing technical solution, an intent with a complex implementation procedure can be divided into a plurality of sub-intents with a relatively simple implementation procedure, and a plurality of objects that can process the intent perform translation in parallel, to improve overall intent translation efficiency of the communication system.

With reference to the first aspect or the second aspect, in some implementations of the first aspect or the second aspect, the method further includes: sending a result of implementing the intent to the terminal device.

According to the foregoing technical solution, the terminal device can obtain the result of implementing the intent, to improve user experience.

With reference to the first aspect or the second aspect, in some implementations of the first aspect or the second aspect, before receiving the first information from the terminal device, the method further includes: establishing a session with the terminal device via a fourth network element. Receiving the first information from the terminal device includes: receiving the first information based on the session.

Optionally, the fourth network element may be an intelligent session management function (intelligent session management function, ISMF).

According to the foregoing technical solution, the terminal device can establish an intent-driven intelligent session with the first network element, so that the terminal device can interact with the network through an intent-based interface, to reduce learning costs of using the network by the terminal.

With reference to the first aspect or the second aspect, in some implementations of the first aspect or the second aspect, the at least one object includes at least one of the following: a network function NF, a management function MF, an application function AF, a call application, an intelligent agent, or a terminal device.

According to the foregoing technical solution, a plurality of types of schedulable objects are provided in an intent implementation process, so that more complex and diversified intents can be implemented, to enrich task scenarios corresponding to the intents that can be implemented.

According to a third aspect, a communication method is provided. The method may be performed by a second network element, or may be performed by a module (for example, a chip or a circuit) in the second network element, or may be performed by a logical node, a logical module, or software that can implement all or some functions of the second network element. This is not limited in this application.

The method includes: receiving a message for requesting a capability and a capability invoking method of at least one object, where the message includes an identifier of the at least one object; and sending the capability and the capability invoking method of the at least one object based on the identifier of the at least one object.

Optionally, the second network element may receive, from a first network element, a message for requesting the capability and the capability invoking method of the at least one object. Correspondingly, the second network element sends the capability and the capability invoking method of the at least one object to the first network element.

Optionally, the second network element may receive, from a third network element, a message for requesting the capability and the capability invoking method of the at least one object. Correspondingly, the second network element sends the capability and the capability invoking method of the at least one object to the third network element.

According to the technical solution provided in this application, a unified channel for storing and querying capability information of each invocable object is provided for another first network element and a third network element in a network, to avoid a need of independently maintaining capability information of an object in a plurality of first network elements and a plurality of second network elements, so as to save overall storage space of a system.

With reference to the third aspect, in some implementations of the third aspect, before receiving the message for requesting the capability and the capability invoking method of the at least one object, the method further includes: receiving the identifier, the capability, and the capability invoking method of the at least one object; and storing a capability template of the at least one object, where a capability template of each of the at least one object includes an identifier, a capability, and a capability invoking method of the object.

According to the foregoing technical solution, the second network element can provide a capability registration channel for an object, and specially store and maintain a capability template of the object, so that the first network element and the third network element quickly and accurately query a needed object capability, to improve efficiency and accuracy of translating an intent by a communication system.

With reference to the third aspect, in some implementations of the third aspect, the method further includes: querying the capability template of the at least one object based on the identifier of the at least one object, to determine the capability and the capability invoking method of the at least one object.

According to the foregoing technical solution, the second network element can query a capability template of an object based on an identifier of the object, to improve efficiency and accuracy of obtaining a needed capability and capability invoking method.

With reference to the third aspect, in some implementations of the third aspect, before receiving the identifier, the capability, and the capability invoking method of the at least one object, the method further includes: receiving a second message from a third network element, where the second message is for subscribing to a capability template of an object. After storing the capability template of the at least one object, the method further includes: sending the capability template of the at least one object to the third network element.

According to the foregoing technical solution, the third network element can subscribe to a capability template from the second network element, so that the third network element can obtain a latest registered capability template of an object. In this way, the first network element or the third network element learns a fulfillable intent and constructs an intent knowledge base, to improve an effect of translating an intent of a terminal device into a specific service procedure or a specific task scheduling policy.

With reference to the third aspect, in some implementations of the third aspect, the method further includes: receiving an identifier, a capability, and a capability invoking method of a terminal device and an identifier of a first network element from a fourth network element, where the first network element has a session with the terminal device; and storing a capability template of the terminal device, where the capability template of the terminal device includes the identifier, the capability, and the capability invoking method that are of the terminal device and the identifier of the first network element; or storing a capability template of the terminal device and the identifier of the first network element, where the capability template of the terminal device includes the identifier, the capability, and the capability invoking method that are of the terminal device, and the capability template of the terminal device corresponds to the identifier of the first network element.

According to the foregoing technical solution, the second network element can further store association information between the terminal device and the first network element, so that the capability of the terminal device can also be invoked in an intent implementation process, to extend an application scenario corresponding to an implementable intent to a service layer.

With reference to the third aspect, in some implementations of the third aspect, the at least one object includes at least one of the following: a network function NF, a management function MF, an application function AF, a call application, an intelligent agent, or a terminal device.

According to the foregoing technical solution, a plurality of types of schedulable objects are provided in an intent implementation process, so that more complex and diversified intents can be implemented, to enrich task scenarios corresponding to the intents that can be implemented.

According to a fourth aspect, a communication method is provided. The method may be performed by a third network element, or may be performed by a module (for example, a chip or a circuit) in the third network element, or may be performed by a logical node, a logical module, or software that can implement all or some functions of the third network element. This is not limited in this application.

The method includes: receiving second information from a first network element, where the second information describes an intent; obtaining a capability and a capability invoking method of at least one object, where the capability of the at least one object is related to the intent; determining an information exchange method between the first network element and the at least one object based on the capability and the capability invoking method of the at least one object, where the information exchange method is for implementing the intent; and sending third information to the first network element, where the third information indicates the information exchange method.

According to the technical solution provided in this application, a new network element, that is, the third network element, is introduced in a network, to assist the first network element in identifying and translating the intent, so that the first network element can directly obtain the information exchange method returned by the third network element, thereby saving computational power of the first network element, and the saved computational power is used for executing another task of the first network element, thereby improving overall working efficiency of a communication system.

With reference to the fourth aspect, in some implementations of the fourth aspect, obtaining the capability and the capability invoking method of the at least one object includes: sending a third message to a second network element, where the third message is for requesting the capability and the capability invoking method of the at least one object, and the third message includes an identifier of the at least one object; and receiving the capability and the capability invoking method of the at least one object from the second network element.

According to the foregoing technical solution, the third network element can query a capability invoking method of an object via the second network element, to improve efficiency and accuracy of obtaining a needed capability and capability invoking method.

With reference to the fourth aspect, in some implementations of the fourth aspect, the method further includes: sending a second message to the second network element, where the second message is for subscribing to a capability template of an object, and the capability template includes an identifier of the object and a capability and a capability invoking method of the object; receiving a capability template of one or more objects from the second network element; and updating an intent knowledge base based on the capability template of the one or more objects, where the intent knowledge base is for determining an information exchange method corresponding to an intent.

According to the foregoing technical solution, the third network element can subscribe to a capability template from the second network element, so that the third network element can obtain a latest registered capability template of an object. In this way, the third network element learns a fulfillable intent and constructs an intent knowledge base, to improve an effect of translating an intent of a terminal device into a specific service procedure or a specific task scheduling policy.

With reference to the fourth aspect, in some implementations of the fourth aspect, the at least one object includes at least one of the following: a network function NF, a management function MF, an application function AF, a call application, an intelligent agent, or a terminal device.

According to the foregoing technical solution, a plurality of types of schedulable objects are provided in an intent implementation process, so that more complex and diversified intents can be implemented, to enrich task scenarios corresponding to the intents that can be implemented.

According to a fifth aspect, a communication method is provided. The method may be performed by a fourth network element, or may be performed by a module (for example, a chip or a circuit) in the fourth network element, or may be performed by a logical node, a logical module, or software that can implement all or some functions of the fourth network element. This is not limited in this application.

The method includes: receiving a fourth message from a terminal device, where the fourth message is for requesting to establish a session, and the fourth message includes an identifier, a capability, and a capability invoking method of the terminal device; establishing a session between the terminal device and a first network element based on the fourth message, where the first network element is configured to implement an intent through information exchange with at least one object; and sending the identifier, the capability, and the capability invoking method of the terminal device and an identifier of the first network element to a second network element.

According to the technical solution provided in this application, the terminal device can establish an intent-driven endogenous intelligent session with the first network element, so that the terminal device can interact with a network through an intent-based interface, to reduce learning costs of using the network by a terminal.

With reference to the fifth aspect, in some implementations of the fifth aspect, the session is for transmitting an intent and/or invoking the capability of the terminal device.

According to the foregoing technical solution, the terminal device and the first network element can perform multi-modal information exchange based on an intelligent session, to enrich service scenarios that can be implemented, and reduce learning costs of using the network by the terminal device.

With reference to the fifth aspect, in some implementations of the fifth aspect, before establishing the session between the terminal device and the first network element, the method further includes: selecting the first network element.

According to the foregoing technical solution, when there are a plurality of available first network elements, the fourth network element can select a first network element that is most suitable for establishing an intelligent session with the terminal device, to improve an effect of intent exchange between the first network element and the terminal device.

With reference to the fifth aspect, in some implementations of the fifth aspect, after establishing the session between the terminal device and the first network element, the method further includes: sending an address of the first network element to the terminal device.

According to the foregoing technical solution, the terminal device can establish an intelligent session and exchange information with the first network element.

With reference to the fifth aspect, in some implementations of the fifth aspect, before sending the address of the first network element to the terminal device, the method further includes: receiving the address of the first network element from the first network element.

According to the foregoing technical solution, efficiency of establishing an intelligent session by the fourth network element for the terminal device and the first network element can be improved.

With reference to the fifth aspect, in some implementations of the fifth aspect, the at least one object includes at least one of the following: a network function NF, a management function MF, an application function AF, a call application, an intelligent agent, or a terminal device.

According to the foregoing technical solution, a plurality of types of schedulable objects are provided in an intent implementation process, so that more complex and diversified intents can be implemented, to enrich task scenarios corresponding to the intents that can be implemented.

According to a sixth aspect, a communication apparatus is provided. The apparatus may be a first network element, or may be a module (for example, a chip or a circuit) in the first network element, or may be a logical node, a logical module, or software that can implement all or some functions of the first network element. The apparatus includes: a transceiver unit, configured to receive first information from a terminal device, where the first information describes an intent; a processing unit, further configured to obtain a capability and a capability invoking method of at least one object, where the capability of the at least one object is related to the intent. The processing unit is configured to: determine an information exchange method between the first network element and the at least one object based on the capability and the capability invoking method of the at least one object, where the information exchange method is for implementing the intent. The processing unit is further configured to: invoke the capability of the at least one object based on the information exchange method.

Optionally, the first network element may be an NIAF.

With reference to the sixth aspect, in some implementations of the sixth aspect, the transceiver unit is specifically configured to: send a first message to a second network element, where the first message is for requesting the capability and the capability invoking method of the at least one object, and the first message includes an identifier of the at least one object; and receive the capability and the capability invoking method of the at least one object from the second network element.

According to a seventh aspect, a communication apparatus is provided. The apparatus may be a first network element, or may be a module (for example, a chip or a circuit) in the first network element, or may be a logical node, a logical module, or software that can implement all or some functions of the first network element. The apparatus includes: a transceiver unit, configured to: receive first information from a terminal device, where the first information describes an intent; the transceiver unit is further configured to send second information to a third network element, where the second information describes the intent; and the transceiver unit is further configured to receive third information from the third network element, where the third information indicates an information exchange method between the first network element and at least one object, the information exchange method is for implementing the intent, and the information exchange method is determined based on a capability and a capability invoking method of the at least one object; and a processing unit, configured to: invoke the capability of the at least one object based on the information exchange method.

With reference to the seventh aspect, in some implementations of the seventh aspect, the processing unit is further configured to: update a local intent knowledge base in the first network element based on the intent and the information exchange method, where the local intent knowledge base is for determining an information exchange method corresponding to an intent.

With reference to the sixth aspect or the seventh aspect, in some implementations of the sixth aspect or the seventh aspect, the processing unit is specifically configured to send, to at least a part of the at least one object, information describing a sub-intent of the intent.

With reference to the sixth aspect or the seventh aspect, in some implementations of the sixth aspect or the seventh aspect, the transceiver unit is further configured to send a result of implementing the intent to the terminal device.

With reference to the sixth aspect or the seventh aspect, in some implementations of the sixth aspect or the seventh aspect, before the first information is received from the terminal device, the processing unit is further configured to establish a session with the terminal device via a fourth network element. The transceiver unit is specifically configured to receive the first information based on the session.

With reference to the sixth aspect or the seventh aspect, in some implementations of the sixth aspect or the seventh aspect, the at least one object includes at least one of the following: a network function NF, a management function MF, an application function AF, a call application, an intelligent agent, or a terminal device.

According to an eighth aspect, a communication apparatus is provided. The apparatus may be a second network element, or may be a module (for example, a chip or a circuit) in the second network element, or may be a logical node, a logical module, or software that can implement all or some functions of the second network element. The apparatus includes a transceiver unit, configured to receive a message for requesting a capability and a capability invoking method of at least one object, where the message includes an identifier of the at least one object. The transceiver unit is further configured to send the capability and the capability invoking method of the at least one object based on the identifier of the at least one object.

Optionally, the second network element may be an RF.

With reference to the eighth aspect, in some implementations of the eighth aspect, before the message for requesting the capability and the capability invoking method of the at least one object is received, the transceiver unit is further configured to receive the identifier, the capability, and the capability invoking method of the at least one object. The apparatus further includes a processing unit, configured to store a capability template of the at least one object, where a capability template of each of the at least one object includes an identifier, a capability, and a capability invoking method of the object.

With reference to the eighth aspect, in some implementations of the eighth aspect, the processing unit is further configured to: query the capability template of the at least one object based on the identifier of the at least one object, to determine the capability and the capability invoking method of the at least one object.

With reference to the eighth aspect, in some implementations of the eighth aspect, before the identifier, the capability, and the capability invoking method of the at least one object are received, the transceiver unit is further configured to receive a second message from a third network element, where the second message is for subscribing to a capability template of an object. After the capability template of the at least one object is stored, the transceiver unit is further configured to send the capability template of the at least one object to the third network element.

With reference to the eighth aspect, in some implementations of the eighth aspect, the transceiver unit is further configured to receive an identifier, a capability, and a capability invoking method of a terminal device and an identifier of a first network element from a fourth network element, where the first network element has a session with the terminal device. The processing unit is further configured to: store a capability template of the terminal device, where the capability template of the terminal device includes the identifier, the capability, and the capability invoking method that are of the terminal device and the identifier of the first network element; or store a capability template of the terminal device and the identifier of the first network element, where the capability template of the terminal device includes the identifier, the capability, and the capability invoking method that are of the terminal device, and the capability template of the terminal device corresponds to the identifier of the first network element.

With reference to the eighth aspect, in some implementations of the eighth aspect, the at least one object includes at least one of the following: a network function NF, a management function MF, an application function AF, a call application, an intelligent agent, or a terminal device.

According to a ninth aspect, a communication apparatus is provided. The apparatus may be a third network element, or may be a module (for example, a chip or a circuit) in the third network element, or may be a logical node, a logical module, or software that can implement all or some functions of the third network element. The apparatus includes: a transceiver unit, configured to receive second information from a first network element, where the second information describes an intent; and a processing unit, further configured to obtain a capability and a capability invoking method of at least one object, where the capability of the at least one object is related to the intent. The processing unit is configured to: determine an information exchange method between the first network element and the at least one object based on the capability and the capability invoking method of the at least one object, where the information exchange method is for implementing the intent. The transceiver unit is further configured to send third information to the first network element, where the third information indicates the information exchange method.

Optionally, the third network element may be an IKB.

With reference to the ninth aspect, in some implementations of the ninth aspect, the transceiver unit is specifically configured to: send a third message to a second network element, where the third message is for requesting the capability and the capability invoking method of the at least one object, and the third message includes an identifier of the at least one object; and receive the capability and the capability invoking method of the at least one object from the second network element.

With reference to the ninth aspect, in some implementations of the ninth aspect, the transceiver unit is further configured to: send a second message to the second network element, where the second message is for subscribing to a capability template of an object, and the capability template includes an identifier of the object and a capability and a capability invoking method of the object; and receive a capability template of one or more objects from the second network element. The processing unit is further configured to: update an intent knowledge base based on the capability template of the one or more objects, where the intent knowledge base is for determining an information exchange method corresponding to an intent.

With reference to the ninth aspect, in some implementations of the ninth aspect, the at least one object includes at least one of the following: a network function NF, a management function MF, an application function AF, a call application, an intelligent agent, or a terminal device.

According to a tenth aspect, a communication apparatus is provided. The apparatus may be a fourth network element, or may be a module (for example, a chip or a circuit) in the fourth network element, or may be a logical node, a logical module, or software that can implement all or some functions of the fourth network element. The apparatus includes: a transceiver unit, configured to receive a fourth message from a terminal device, where the fourth message is for requesting to establish a session, and the fourth message includes an identifier, a capability, and a capability invoking method of the terminal device; and a processing unit, configured to: establish a session between the terminal device and a first network element based on the fourth message, where the first network element is configured to implement an intent through information exchange with at least one object. The transceiver unit is further configured to send the identifier, the capability, and the capability invoking method of the terminal device and an identifier of the first network element to a second network element.

Optionally, the fourth network element may be an ISMF.

With reference to the tenth aspect, in some implementations of the tenth aspect, the session is for transmitting an intent and/or invoking the capability of the terminal device.

With reference to the tenth aspect, in some implementations of the tenth aspect, before the session between the terminal device and the first network element is established, the processing unit is further configured to select the first network element.

With reference to the tenth aspect, in some implementations of the tenth aspect, after the session between the terminal device and the first network element is established, the transceiver unit is further configured to send an address of the first network element to the terminal device.

With reference to the tenth aspect, in some implementations of the tenth aspect, before the address of the first network element is sent to the terminal device, the transceiver unit is further configured to receive the address of the first network element from the first network element.

With reference to the tenth aspect, in some implementations of the tenth aspect, the at least one object includes at least one of the following: a network function NF, a management function MF, an application function AF, a call application, an intelligent agent, or a terminal device.

According to an eleventh aspect, a communication apparatus is provided, and includes a processor. The processor is configured to: execute a computer program or instructions or use a logic circuit, to cause the communication apparatus to perform the method according to any one of the first aspect and the possible implementations of the first aspect; or to cause the communication apparatus to perform the method according to any one of the second aspect and the possible implementations of the second aspect; or to cause the communication apparatus to perform the method according to any one of the third aspect and the possible implementations of the third aspect; or to cause the communication apparatus to perform the method according to any one of the fourth aspect and the possible implementations of the fourth aspect; or to cause the communication apparatus to perform the method according to any one of the fifth aspect and the possible implementations of the fifth aspect.

In a possible implementation, the communication apparatus further includes a memory configured to store the computer program or the instructions.

In a possible implementation, the communication apparatus further includes a communication interface configured to input and/or output a signal.

According to a twelfth aspect, a communication apparatus is provided, and includes a logic circuit and an input/output interface. The input/output interface is configured to input and/or output a signal. The logic circuit is configured to perform the method according to any one of the first aspect or the possible implementations of the first aspect. Alternatively, the logic circuit is configured to perform the method according to any one of the second aspect and the possible implementations of the second aspect. Alternatively, the logic circuit is configured to perform the method according to any one of the third aspect and the possible implementations of the third aspect. Alternatively, the logic circuit is configured to perform the method according to any one of the fourth aspect and the possible implementations of the fourth aspect. Alternatively, the logic circuit is configured to perform the method according to any one of the fifth aspect and the possible implementations of the fifth aspect.

According to a thirteenth aspect, a communication system is provided. The communication system includes the communication apparatus according to any one of the sixth aspect or the possible implementations of the sixth aspect and/or the communication apparatus according to any one of the seventh aspect or the possible implementations of the seventh aspect.

In a possible implementation, the communication system further includes the communication apparatus according to any one of the eighth aspect or the possible implementations of the eighth aspect.

In a possible implementation, the communication system further includes the communication apparatus according to any one of the ninth aspect or the possible implementations of the ninth aspect.

In a possible implementation, the communication system further includes the communication apparatus according to any one of the tenth aspect or the possible implementations of the tenth aspect.

According to a fourteenth aspect, a computer-readable storage medium is provided. The computer-readable storage medium stores a computer program or instructions. When the computer program or the instructions are run on a computer, the method according to any one of the first aspect or the possible implementations of the first aspect is performed; or the method according to any one of the second aspect and the possible implementations of the second aspect is performed; or the method according to any one of the third aspect and the possible implementations of the third aspect is performed; or the method according to any one of the fourth aspect and the possible implementations of the fourth aspect is performed; or the method according to any one of the fifth aspect and the possible implementations of the fifth aspect is performed.

According to a fifteenth aspect, a computer program product is provided, and includes instructions. When the instructions are run on a computer, the method according to any one of the first aspect or the possible implementations of the first aspect is performed; or the method according to any one of the second aspect and the possible implementations of the second aspect is performed; or the method according to any one of the third aspect and the possible implementations of the third aspect is performed; or the method according to any one of the fourth aspect and the possible implementations of the fourth aspect is performed; or the method according to any one of the fifth aspect and the possible implementations of the fifth aspect is performed.

### BRIEF DESCRIPTION OF DRAWINGS

FIG. 1 is a diagram of procedure design complexity of a conventional communication system;
FIG. 2 is a diagram of an application scenario to which a communication method according to an embodiment of this application is applied;
FIG. 3 is a diagram of procedure design complexity of a communication system according to an embodiment of this application;
FIG. 4 is a diagram of a communication system according to an embodiment of this application;
FIG. 5 is a block diagram of a procedure of a communication method according to an embodiment of this application;
FIG. 6 is a block diagram of a procedure of another communication method according to an embodiment of this application;
FIG. 7 is a block diagram of a procedure of another communication method according to an embodiment of this application;
FIG. 8 is a block diagram of a procedure of another communication method according to an embodiment of this application;
FIG. 9 is a block diagram of a procedure of another communication method according to an embodiment of this application;
FIG. 10 is a block diagram of a procedure of another communication method according to an embodiment of this application;
FIG. 11 is a block diagram of a procedure of another communication method according to an embodiment of this application;
FIG. 12 is a block diagram of a procedure of another communication method according to an embodiment of this application;
FIG. 13 is a block diagram of a structure of a communication apparatus according to an embodiment of this application;
FIG. 14 is a block diagram of a structure of another communication apparatus according to an embodiment of this application; and
FIG. 15 is a block diagram of a structure of another communication apparatus according to an embodiment of this application.

### DESCRIPTION OF EMBODIMENTS

The technical solutions in embodiments of this application may be applied to various communication systems, for example, a 5th generation (5th generation, 5G) system, a 6th generation (6th generation, 6G) system or a new radio (new radio, NR) system, and a future communication system.

By way of example and not limitation, in embodiments of this application, a terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a subscriber unit (subscriber unit), a terminal device station, a terminal device agent, a terminal device apparatus, or a terminal in V2X communication. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal in a 5G network, a terminal in a 6G network, a terminal in a future evolved network, or the like. This is not limited in embodiments of this application.

The terminal device in embodiments of this application may alternatively be a mobile phone (mobile phone), a tablet computer (pad), a computer having a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in transportation safety, a wireless terminal in a smart city (smart city), or a wireless terminal in a smart home (smart home).

The wearable device may also be referred to as a wearable intelligent device, and is a generic term for wearable devices such as head-mounted display extended reality (extended reality, XR) glasses, gloves, watches, clothes, and shoes that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smart watch or smart glasses, and include a device that is dedicated to one type of application function and that needs to collaboratively work with another device such as a smartphone, for example, various smart bands or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for human-machine interconnection or thing-thing interconnection.

In addition, in this application, the terminal device may further include sensors such as an intelligent printer, a train detector, and a gas station. Main functions include collecting data (by some terminal devices), receiving control information and downlink data from a network device, sending an electromagnetic wave, and transmitting uplink data to the network device.

In embodiments of this application, the network device may be a device that is configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network or a 6G network and a future communication system, a network device in a future evolved PLMN network, or the like, may be an access point (access point, AP) in a WLAN, or may be a gNB in a new radio (new radio, NR) system. This is not limited in embodiments of this application. It may be understood that all or some functions of the network device in this application may alternatively be implemented by a software function running on hardware, or may be implemented by an instantiated virtualization function on a platform (for example, a cloud platform).

The foregoing listed functions and specific implementations of the terminal device and the network device are merely examples for description. This is not limited in this application.

In embodiments of this application, the terminal device or the network device includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, a contacts book, word processing software, and instant messaging software. In addition, a specific structure of an execution entity of a method provided in embodiments of this application is not particularly limited in embodiments of this application, provided that a program that records code of the method provided in embodiments of this application can be run to perform communication according to the method provided in embodiments of this application. For example, the execution entity of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

Resources and capabilities of new dimensions such as computing, intelligence, data, sensing are added to a 6G system based on connection enhancement in a 5G system. The 6G system is no longer a pure channel, but provides platform-based service capabilities, to achieve intelligent connectivity of everything. However, enhanced evolution based on an existing mobile network protocol system causes accumulation of complexity of system design and implementation, which is unsustainable. A main reason lies in that an existing network system architecture is defined based on a standard signaling procedure. Design complexity of the architecture system and the signaling procedure depends on a quantity of service scenarios, a quantity of service procedures in each scenario, and a quantity of network functions in each service procedure.

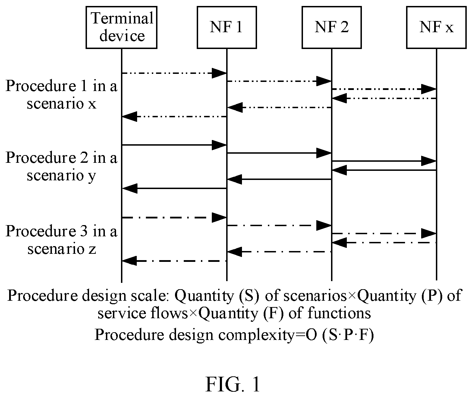

FIG. 1 is a diagram of a procedure design in a conventional communication system. As shown in FIG. 1, each NF in the system has a different signaling exchange manner in each service procedure in each scenario. Therefore, a procedure design scale is: Quantity S of scenarios×Quantity P of service flows×Quantity F of network functions, and corresponding procedure design complexity is represented as O (S·P·F). As types and quantities of objects participating in interaction in a communication system increase, the foregoing conventional end-to-end signaling procedure customization mode causes problems such as a large quantity of signaling types, complex logic, a long version iteration cycle, and poor scalability. Therefore, how to reduce internal procedure design complexity of a communication system becomes a technical problem that needs to be urgently resolved.

In view of this, a communication system provided in embodiments of this application identifies and understands an intent of a user via an endogenous intelligent agent in a network, to implement mapping and orchestration from the intent to a scenario and a service flow, so as to drive a network function, an intelligent agent, and a multi-modal terminal device to finally fulfill the intent of the user, and implement transformation from a procedure-driven network to an intent-driven network.

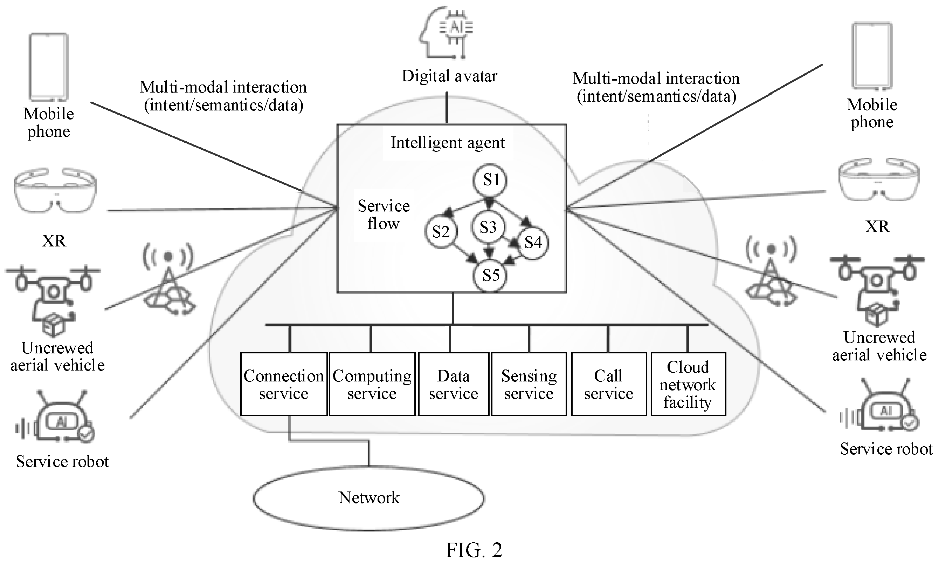

FIG. 2 is a diagram of an application scenario to which a communication method according to an embodiment of this application is applicable. As shown in FIG. 2, the system is a semantic communication system and is user-centric. Based on an intent sent by a user by using a terminal device, the system drives multi-modal information exchange between human, machine, data, and genie, and translates the intent of the user into a specific service flow by using endogenous capabilities such as a communication capability, a sensing capability, a computing capability, a data capability, and an intelligent capability of an intelligent agent, to directly invoke or indirectly drive capabilities of a plurality of objects to implement the intent of the user.

The "human" mentioned in the foregoing semantic communication scenario may be a terminal device of for the user, for example, a mobile phone shown in FIG. 2, or another terminal device that can send the intent of the user, including but not limited to a tablet computer, a computer having a wireless transceiver function, a smartwatch, and the like. This is not specifically limited in this application.

The "machine" mentioned in the foregoing semantic communication scenario may be a machine, to be specific, a type of terminal device that has a specific function or can complete a specific task, for example, an XR device or an uncrewed aerial vehicle shown in FIG. 2, or another terminal device that has a specific function or can complete a specific task, including but not limited to a vehicle-mounted terminal device, a wireless terminal in a smart home, a terminal device in an internet of things system, and the like. This is not specifically limited in this application.

The "data" mentioned in the foregoing semantic communication scenario may be a digital human or a digital intelligent human. The digital human or the digital intelligent human is a digital virtual image created based on a computer graphics (computer graphics, CG) technology and an artificial intelligence technology, has a human appearance or behavior pattern, and can perform intelligent voice interaction, visual recognition, emotional experience, and the like, for example, a digital avatar shown in FIG. 2.

The "genie" in the foregoing semantic communication scenario may be a type of entity having autonomous or semi-autonomous intelligence. The entity may include a physical device, for example, a service robot shown in FIG. 2, or another terminal device having autonomous or semi-autonomous intelligence, including but not limited to a robot or a machine dog. The entity may alternatively include a virtual entity, for example, an intelligent agent in a network. The intelligent assistant can identify and understand an intent and semantics of a physical communication object and/or a virtual communication object, implement efficient intent and semantic interaction and transfer between communication objects, and can assist in completing task processing.

In embodiments of this application, the "object" is a network device and/or a terminal device that have a specific capability and participate in a specific service procedure in a specific service scenario in a communication system, and include but are not limited to a network function (network function, NF), a management function (management function, MF), an intelligent agent, a call application, a third-party application function (application function, AF), and different types of terminal devices. The NF is a type of network device that provides a service for the terminal device or another network device. As shown in FIG. 2, the service provided by the NF includes but is not limited to at least one of the following: a connection service, a computing service, a data service, or a sensing service. The MF is a type of network device that provides a management service for the terminal device or another network device. The management service provided by the MF may be a cloud network facility management service in FIG. 2, or may be another control plane function, for example, the MF is management and network orchestration (management and network orchestration, MANO). The AF is an application server that provides the service for a terminal device or another network device. The call application is for providing a call service for the terminal device, for example, an internet protocol (internet protocol, IP) multimedia system (IP multimedia system, IMS) new call. The intelligent agent is an entity based on an artificial intelligence (artificial intelligence, AI) technology, for example, the digital human or the digital intelligent human corresponding to the "data" in the foregoing description, or the virtual entity included in the "genie" in the foregoing description. Different types of terminal devices include but are not limited to terminal devices corresponding to the "human", "machine", and "genie" in the foregoing description.

It should be understood that, for different types of objects, there may be different representation forms of "capabilities". For example, for the NF or the AF, the capability may be a service that can be externally provided by the NF or the AF; for the terminal device or the intelligent agent, the capability may be a task that can be completed by the terminal device or the intelligent agent; or the capability may be internal processing of the object, for example, setting a parameter of the MF. A representation form of the capability of the object is not specifically limited in this application.

For "capabilities" in different representation forms, there are different forms of "capability invoking methods". The "capability invoking method" described in embodiments of this application may be any method in which a service provided by an object can be used or an object can be controlled to complete a task, including but not limited to an application programming interface (application programming interface, API) of the object, a control instruction of the object, a parameter configuration rule of the object, an intent of the object, a semantic interface, or the like. A form of the capability invoking method is not specifically limited in embodiments of this application.

The "intent" mentioned in embodiments of this application is an expected result of a target object. The intent includes but is not limited to the following information: an intent expectation, an intent object, an intent target, an intent context, and the like. The intent expectation means a service scenario for which the intent is intended, for example, entrusting a digital human to perform a task on behalf of a user, intelligently driving a terminal device, extending a computing capability of a terminal device, and establishing a virtual network for a machine group. The intent object means a target object for which the intent is intended, for example, a terminal device, a base station, a virtual private network, a call application, a computing service, and a third-party application. The intent target means a target value that needs to be achieved by a performance indicator, for example, a throughput rate, a delay, and a handover success rate. The intent context means a constraint on the intent through relationships such as comparison, inclusion, and association, for example, intent function duration and an intent priority. A description form of the intent includes but is not limited to a natural language, a formatted intent expression model, and the like. This is not specifically limited in this application.

The "service flow" described in embodiments of this application means a specific information exchange procedure between an intelligent agent and an object and/or between a plurality of objects needed for completing a specific service in a specific service scenario, that is, a specific implementation of the intent. According to a type and a degree of autonomous intelligence of an information receiver, the exchanged information may include specific signaling, or may include a task scheduling policy, or may include the intent.

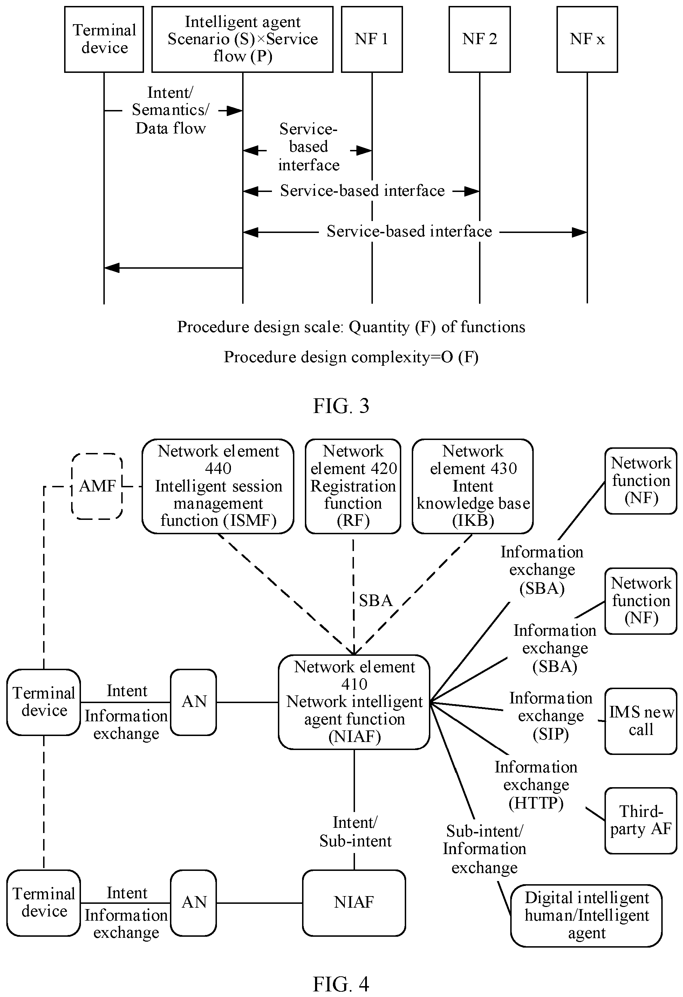

FIG. 3 is a diagram of a procedure design of a communication system according to an embodiment of this application. As shown in FIG. 3, an intelligent agent is introduced into the communication system provided in this embodiment of this application. A unified intent-based interface is used between the intelligent agent and a terminal device, and information such as semantics and data flows that can express an intent is exchanged. The intelligent agent translates the intent into a corresponding scenario and service flow, so that the terminal device only needs to express the intent without knowing how to implement a scenario and a service flow corresponding to each intent, to reduce learning costs of using a network by the terminal device. On this basis, for the NF, a service-based interface, only how to invoke capabilities of the NFs needs to be defined between the intelligent agent and each NF. Because a capability invoking method of an NF is irrelevant to a specific scenario or a service flow, a procedure design scale is: a quantity of network functions F, and corresponding procedure design complexity is represented as O (F). In comparison with a conventional communication system, the procedure design complexity is significantly reduced.

The following describes, in detail with reference to FIG. 4, a communication system 400 according to an embodiment of this application. As shown in FIG. 4, the system 400 includes a network element 410, and the network element 410 may be a network intelligent agent function (network intelligent agent function, NIAF). The NIAF is an implementation of the intelligent agent described above, and is configured to receive and identify an intent (or an intent sent by a terminal device via an access network (access network, AN)) from a terminal device (for example, an intelligent terminal device), and translate the intent into a specific information exchange method, to directly invoke or indirectly drive capabilities of a plurality of objects to finally fulfill the intent sent by a user via the terminal device. As described above, these objects include but are not limited to another NF or MF, an intelligent agent (for example, a digital intelligent human), a call application (for example, an IMS new call), a third-party AF, and different types of terminal devices.

The network element 410 may further map the intent to the information exchange method based on a local intent knowledge base. The network element 410 may further have an interaction interface. The interaction interface may be configured to receive the intent, or may be configured to interact with information of another type, or may be configured to forward the intent or a sub-intent of the intent to another device. It should be understood that composition and a working procedure of the network element 410 are merely examples for description. An internal design of the network element 410 is not specifically limited in this application.

Optionally, the communication system 400 may further include a network element 440, and the network element 440 may be an intelligent session management function (intelligent session management function, ISMF). Various types of terminal devices, including but not limited to a mobile phone, XR glasses, an internet of things terminal, an uncrewed aerial vehicle, a machine dog, a robot, and the like, may establish a session with the network element 410 via the network element 440. In this embodiment of this application, a session established between the NIAF and the terminal device may be referred to as an intelligent session. The intelligent session is for implementing intent exchange between the terminal device and the network element 410, and/or is for implementing information exchange that is between the network element 410 and the terminal device and that is needed for fulfilling the intent, including but not limited to semantic information that is sent by the terminal device to the network element 410 and that expresses the intent, an intent sent by the network element 410 to an intelligent terminal device that can identify and implement the intent, specific signaling used by the network element 410 to control the terminal device, multi-modal data (such as sensor data, image data, and audio and video data) received or collected by the network element 410 from the terminal device, and the like. The terminal device may address the network element 440 via another network element (for example, an access and mobility management function (access and mobility management function, AMF) network element), or may be directly connected to the network element 440. This is not specifically limited in this application.

Optionally, the communication system 400 may further include a network element 420 and/or a network element 430. The network element 420 may be a registration function (registration function, RF), and the network element 430 may be an intent knowledge base (intent knowledge base, IKB). The network element 410 may rely on the network element 420 and the network element 430 to implement accurate identification and translation of the intent. The network element 420 is configured to record capability templates of various types of objects, to be specific, specific capabilities that can be invoked and capability invoking methods provided by each type of object. In other words, the object registers the capability template with the network element 420. The capability template registered by the object with the network element 420 determines a type and a range of intents that can be fulfilled by the communication system 400, and an intent beyond the capability template cannot be fulfilled. The network element 430 learns, by learning information about the capability template, an intent that can be fulfilled by the communication system 400, and maps the intent to a service procedure or a task orchestration policy that drives a capability object. When the network element 410 receives a new intent, if the new intent cannot be processed, the network element 410 may forward the intent to the network element 430 for identification to obtain a translation result, and use the current translation result as knowledge to update the local intent knowledge base, to accelerate subsequent translation of a same or similar intent.

It should be understood that the NIAF, the RF, the IKB, and the ISMF may be independent network elements in the communication system, or may be integrated into another network element as functional modules. For example, the RF, the IKB, and/or the ISMF may be used as functional modules in the network element 410, respectively, so that the network element 410 has functions such as registering a capability template, learning intent knowledge, and/or establishing an intelligent session while having an NIAF function.

As described above, according to a type and a degree of autonomous intelligence of an information receiver, the exchanged information may include specific signaling, or may include a task scheduling policy, or may include the intent. In other words, the result of translating the intent by the intelligent agent may include a service procedure and/or a task scheduling policy and/or a sub-intent. For example, if the object related to the intent is a non-intelligent terminal device, NF, AF, call application, or the like, the intelligent agent may translate the intent into a specific service procedure. In this case, the intelligent agent may send specific signaling based on various protocols to the object, for example, service-based architecture (service-based architecture, SBA)-based signaling exchange with the NF, session initiation protocol (session initiation protocol, SIP)-based signaling exchange with the IMS new call, and hypertext transfer protocol (hypertext transfer protocol, HTTP)-based signaling exchange with the AF. For another example, if the object related to the intent is a terminal device, an NF, an MF, an AF, or the like that has autonomous intelligence and that can autonomously determine a complete task execution procedure according to a specific task scheduling policy, the intelligent agent may translate the intent into a task scheduling policy. In this case, the intelligent agent sends only the task scheduling policy to the object, and does not specify specific signaling exchange, and the object determines a specific implementation procedure according to the task scheduling policy to complete the task. For another example, if the object related to the intent is a terminal device, a digital intelligent human, another NIAF, or the like that has higher intelligence and that has a capability of understanding and implementing the intent, the intelligent agent may translate the intent into a sub-intent. In this case, the intelligent agent decomposes the intent into sub-intents and allocates the sub-intents to the object, and the object further processes the sub-intents to implement the overall intent. It should be understood that, in an actual application scenario, a result of translating the intent by the intelligent agent may be a combination of the foregoing plurality of manners.

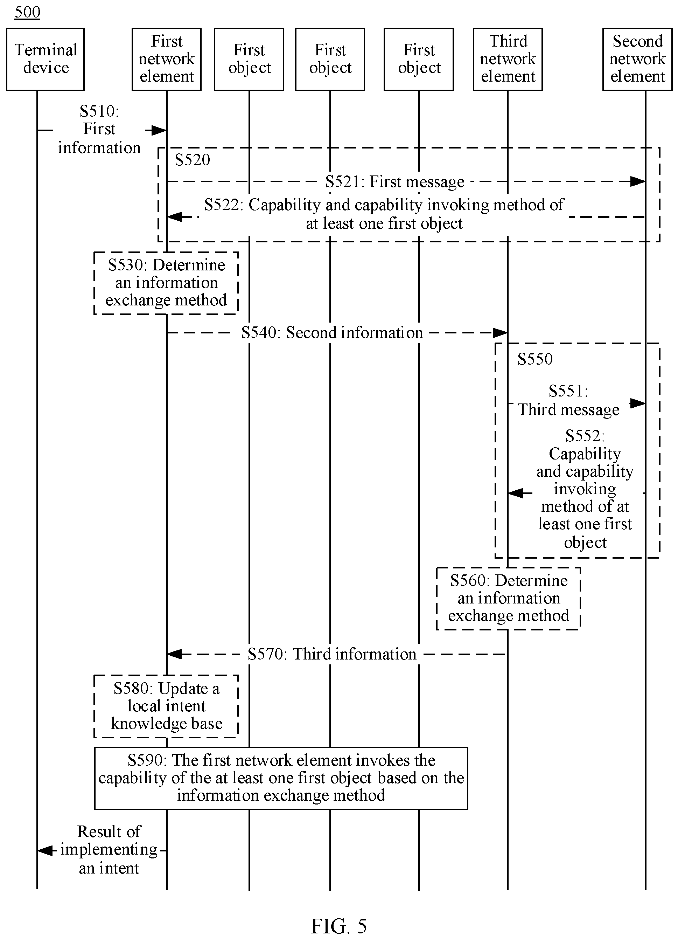

With reference to FIG. 5 to FIG. 12, the following describes, in detail, a communication method provided in embodiments of this application based on the foregoing communication system. FIG. 5 is a schematic flowchart of a communication method 500 according to an embodiment of this application. Optionally, the method shown in FIG. 5 may be applied to the communication system 400 shown in FIG. 4.

In this embodiment, an example in which a network element and a terminal device are used as execution entities of interaction is used to illustrate the method. However, the execution entity of the interaction is not limited in this application. For example, a network element in FIG. 5 may alternatively be a chip, a chip system, or a processor that supports the method that can be implemented by the network element, or may be a logical module or software that can implement all or some functions of the network element. A terminal device in FIG. 5 may alternatively be a chip, a chip system, or a processor that supports the method that can be implemented by the terminal device, or may be a logical module or software that can implement all or some functions of the terminal device.

It should be understood that a specific type of the terminal device is not limited in embodiments of this application. For example, the terminal device may be UE, or may be a terminal device of another type. This is not specifically limited in this application.

As shown in FIG. 5, the method includes the following steps.

Step S510: The terminal device sends first information to a first network element. Correspondingly, the first network element receives the first information from the terminal device.

The first network element may be an NIAF, for example, the NIAF 410 shown in FIG. 4. Specifically, the first information describes an intent. Therefore, the first information may also be referred to as an intent description. The intent description may be a natural language description, for example, a natural language text or voice, or may be a formatted intent expression model, for example, an intent expression model defined by an intent-driven management service (intent-driven management service, IDMS) of the 3rd generation partnership project (3rd generation partnership project, 3GPP) management standard working group SA5.

The first information may be included in an intent request message sent by the terminal device to the first network element. The intent request message is for requesting to implement the intent described in the first information. Optionally, the intent request message may further include other information, for example, a UE identifier (identifier, ID), so that the first network element or another entity in the system determines an identity of the terminal device that sends the information.

Optionally, the intent request message may further carry an attachment, including but not limited to a picture, a text, a voice, a video, a binary code file, an application (application, APP) installation package, and the like, to extend or supplement content of the intent description.

Optionally, the first network element may interact with the terminal device a plurality of times to determine a specific intent of the terminal device. For example, the first network element may request the terminal device to supplement detailed information of the intent description, or the first network element may send an identified intent to the terminal device to determine whether the intent is correctly identified. The foregoing attachment may alternatively be provided during the plurality of intent determining interactions.

After step S510, the first network element can obtain an information exchange method between the first network element and at least one object, where the information exchange method is for implementing the intent described in the first information. Optionally, the information exchange method may be determined by the first network element, or may be obtained by the first network element from another network element. A case in which the information exchange method is determined by the first network element may correspond to the following steps S520 and S530, and a case in which the information exchange method is obtained from another network element may correspond to the following steps S540 to S570. In other words, steps S520 to S570 described below may be selectively performed. For example, steps S520 and S530 may be performed, or steps S540 to S570 may be performed. The following describes the two cases in detail.

In some possible implementations, the information exchange method may be determined by the first network element. This specifically corresponds to steps S520 and S530.

Step S520: The first network element obtains a capability and a capability invoking method of the at least one object.

Specifically, the at least one object is an object related to implementing the foregoing intent. For example, the first network element may determine, based on a local intent knowledge base and the intent described in the first information, specific capabilities of specific objects in the communication system that need to be scheduled to implement the intent. The objects that are determined to be scheduled are referred to as objects. The object includes but is not limited to an NF, an MF, an AF, a call application, an intelligent agent, a terminal device, and the like.

The local intent knowledge base may be implemented in a plurality of manners, including but not limited to a mapping table between an intent and a capability of an object, a knowledge graph representing a relationship between an intent and a capability of an object, or a neural network model whose input is an intent description and output is a capability of an object. In an example, the first network element may store, as a mapping table, a capability of an object corresponding to each intent, to determine, through table lookup based on the first information, an object needed for implementing the foregoing intent. For another example, the first network element may construct a knowledge graph based on different intents and capabilities of different objects, to infer, based on the first information by using the knowledge graph, an object that has a relationship with the foregoing intent. For still another example, the first network element may train a neural network model by using a known intent and a corresponding capability of an object as training data, to use the foregoing intent as input data of the neural network model based on the first information, and determine an object based on output data of the neural network model. It should be understood that the local intent knowledge base may alternatively be implemented in another manner. A manner of translating the intent by the first network element is not specifically limited in embodiments of this application.

After determining the at least one object, the first network element can query, from an RF, a capability and a capability invoking method corresponding to each object. Specifically, step S520 may include the following step S521 and step S522.

Step S521: The first network element sends a first message to a second network element. Correspondingly, the second network element receives the first message from the first network element.

The second network element may be an RF, for example, the RF 420 shown in FIG. 4. Specifically, the first message is for requesting the capability and the capability invoking method of the at least one object, and the capability of the at least one object is related to the intent described in the first information. Therefore, the first message may also be referred to as a first capability query request message.

The first network element may send the first message to the second network element based on the determined at least one object. The first message may include an identifier of an object, so that the second network element can query a capability and a capability invoking method of the object. The first message may further include a UE ID. Specifically, the second network element may store a capability template of each object that has performed capability registration with the second network element. The capability template includes at least an identifier of an object and a corresponding capability of each object and each corresponding capability invoking method. Therefore, the second network element can query a capability template of the at least one object based on an identifier of the at least one object in the first message, to determine the capability of the at least one object and the corresponding invoking method. The identifier of the object may be, for example, a name of the object or an ID of the object. This is not specifically limited in this application.

Step S522: The second network element sends the capability and the capability invoking method of the at least one object to the first network element. Correspondingly, the first network element receives the capability and the capability invoking method of the at least one object from the second network element.

For example, the second network element may send a first capability query response message to the first network element in response to the first capability query request message. The first capability query response message may include the UE ID and a capability of each of the at least one object and a corresponding capability invoking method, to feed back a query result to the first network element.

It should be understood that step S521 and step S522 are merely examples in which the NIAF and the RF interact as two independent network elements. However, an implementation of step S520 is not limited thereto. For example, the first network element may alternatively be integrated with a function registration module configured to locally store a capability template of an object. In this case, the capability and the capability invoking method of the at least one object may be obtained by the first network element through local query. For another example, the capability and the capability invoking method of the at least one object may alternatively be directly obtained by the first network element from the at least one object through requesting. This is not specifically limited in this application.

Step S530: The first network element determines the information exchange method.

For example, the first network element determines the information exchange method between the first network element and the at least one object based on the capability and the capability invoking method of the at least one object. Based on the information exchange method, the capability of the at least one object is invoked to implement the foregoing intent.

It should be understood that the information exchange method between the first network element and the at least one object may include an information exchange method between the first network element and each of at least a part of the at least one object and/or an information exchange method between at least two of the at least one object.

In the foregoing process, provided that the first network element and the second network element interact with each other, the intent description can be translated into an information exchange procedure that can implement the intent, so that intent translation efficiency is improved.

In some other possible implementations, if the first network element cannot correctly translate an intent of a user based on the built-in local intent knowledge base, the first network element may send intent translation request information to an IKB, and forward the intent description and a corresponding attachment to the IKB, so that the IKB performs intent identification and translation. This specifically corresponds to steps S540, S550, S560, and S570.

Step S540: The first network element sends second information to a third network element. Correspondingly, the third network element receives the second information from the first network element.

The third network element may be an IKB, for example, the IKB 430 shown in FIG. 4. Specifically, the second information describes the intent described in the first information. A description form of the second information may be the same as that of the first information, or may be different from that of the first information. For example, a natural language description is converted into an intent expression model. This is not specifically limited in this application. The second information may be included in an intent translation request message sent by the first network element to the third network element. The intent translation request message is for requesting the third network element to translate the intent described in the second information. Optionally, the intent request message may further include other information, for example, a UE ID and an attachment corresponding to the intent description.

Step S550: The third network element obtains the capability and the capability invoking method of the at least one object.

For example, the third network element can determine, based on the second information, the at least one object related to implementing the intent described in the second information. For a specific implementation, refer to related descriptions of the first network element determining the object based on the local intent knowledge base in S520, including but not limited to the mapping table, the knowledge graph, the neural network model, and the like. This is not specifically limited in this application.

After determining the at least one object, the third network element may perform the following steps S551 and S552 to obtain the capability and the capability invoking method of the at least one object from the second network element. Details are as follows:

Step S551: The third network element sends a third message to the second network element. Correspondingly, the second network element receives the third message from the third network element.

Specifically, the third message is for requesting the capability and the capability invoking method of the at least one object, and the capability of the at least one object is related to the intent described in the second information. Therefore, the third message may also be referred to as a second capability query request message. The third message may include an identifier of an object, so that the second network element can query a capability and a capability invoking method of the object. The third message may further include a UE ID.

Step S552: The second network element sends the capability and the capability invoking method of the at least one object to the third network element. Correspondingly, the third network element receives the capability and the capability invoking method of the at least one object from the second network element.

For example, the second network element may send a second capability query response message to the third network element in response to the second capability query request message. The second capability query response message may include a capability of each of the at least one object and a corresponding capability invoking method, to feed back a query result to the first network element. Optionally, the second capability query response message includes a UE ID.

It should be understood that step S551 and step S552 are merely an implementation of step S550, and the third network element may alternatively obtain the capability and the capability invoking method of the at least one object in another manner. This is not specifically limited in this application.

Step S560: The third network element determines the information exchange method.

For example, the third network element determines the information exchange method between the first network element and the at least one object based on the capability and the capability invoking method of the at least one object. Based on the information exchange method, the capability of the at least one object is invoked to implement the foregoing intent.

Optionally, a specific process implemented by the third network element and the second network element in steps S550 and S560 may be similar to the process implemented by the first network element and the second network element in steps S520 and S530. For details, refer to the descriptions of corresponding related content. Details are not described herein again.

Step S570: The third network element sends third information to the first network element. Correspondingly, the first network element receives the third information from the third network element.

Specifically, the third information indicates the information exchange method determined by the third network element. The third information may be included in an intent translation response message that is sent by the third network element to the first network element in response to the intent translation request message, to feed back an intent translation result to the first network element.

In the foregoing process, the first network element can directly obtain the information exchange method returned by the third network element, thereby saving computational power of the first network element, and the saved computational power is used for executing another task of the first network element, thereby improving overall working efficiency of the communication system.

In addition, the third network element may perform higher-level intent translation than the local intent knowledge base of the first network element, that is, the third network element can perform more comprehensive and accurate translation than the local intent knowledge base of the first network element, to improve a success rate of intent execution. "Higher-level" may be because the third network element uses a translation method that is more accurate than the local intent knowledge base of the first network element. For example, the local intent knowledge base uses a relatively simple mapping table manner, that is, a correspondence between some known intents and capabilities of objects as a mapping table for table lookup and translation, to save computational power and the like. However, the third network element uses a neural network model with a relatively complex algorithm. Therefore, the third network element can complete a part of translation that cannot be completed by the local intent knowledge base. The third network element and the local intent knowledge base may use a same translation method. In this case, "higher-level" may be because the third network element has more comprehensive sample data for learning than the local intent knowledge base. For example, the third network element may use all registered capabilities of an object in the RF as the sample data for learning, but the local intent knowledge base may use only an intent and a capability of an object that are obtained in an actual service as a sample for learning to save storage space and the like. Therefore, the third network element can complete a part of translation that cannot be completed by the local intent knowledge base. Alternatively, another case may be used, for example, a combination of the foregoing two cases. This is not specifically limited in this application.

Optionally, the foregoing steps S520 and S530 may be partially or completely combined with steps S540 to S570, and a sequence of the steps may be interchangeable. For example, after step S510, steps S540 to S570 may be performed first. However, the intent translation response message sent by the third network element to the first network element may not include a specific information exchange method, but only include an information exchange policy, for example, specific capabilities of specific objects that need to be invoked and a sequence of invoking the capabilities of the objects. In this case, after steps S540 to S570, the first network element may further perform steps S520 and S530, to query, according to the information exchange policy fed back by the third network element, the second network element for a related object capability invoking method, so as to determine a specific information exchange method. For another example, because the intent translation response message in the foregoing example may not include a specific information exchange method, the third network element may not obtain the capability invoking method of the object. In this case, only steps S540, S570, S520, and S530 may be performed. This is not specifically limited in this application.

Optionally, in a case in which the first network element requests the third network element to assist in performing intent translation, that is, in a case in which at least step S570 is performed, the method 500 may further include the following step S580.

S580: The first network element updates the local intent knowledge base.

For example, the first network element may update the local intent knowledge base in the first network element based on the intent described in the first information and the information exchange method included in the intent translation response message returned by the third network element. For example, the first network element may learn a current intent and the at least one object determined by the third network element as a group of sample data. For example, if the local intent knowledge base is implemented as a mapping table, a first intent and at least one corresponding object may be added to the mapping table. If the local intent knowledge base is implemented as a knowledge graph, when there is no node corresponding to a first intent and/or no node corresponding to at least one object in the graph, a corresponding node may be added to the graph, and a relationship between the node corresponding to the first intent and the node corresponding to the at least one object is added. If the local intent knowledge base is implemented as a neural network model, a first intent and at least one corresponding object may be used as a group of new training data for training the neural network model, to update a parameter of the model. The local intent knowledge base may alternatively learn the sample data in another manner. This is not specifically limited in this application.

According to the foregoing solution, the NIAF can continuously perform learning based on generated data in an actual working process, to automatically adapt to a new intent and/or a capability of a new object, and a service scenario that can be covered by intent translation and accuracy can be improved without an interface and a procedure upgrade. In addition, after the local knowledge base is updated, the NIAF can directly translate a same or similar intent encountered in subsequent work without using the IKB, to improve intent translation efficiency.

After the information exchange method between the first network element and the at least one object is obtained by using the foregoing steps, the first network element can perform the following step S590.

Step S590: The first network element invokes the capability of the at least one object based on the information exchange method.

As described above, information exchange between the first network element and the at least one object includes information exchange between the first network element and each of at least a part of the at least one object and/or information exchange between at least two of the at least one object. Therefore, in step S590, the first network element may directly schedule the object or indirectly drive the object. Direct scheduling refers to directly sending information to the object, to schedule the object to implement a corresponding capability. Indirect driving refers to sending information to another object, so that the another object sends information to the object, to drive the object to implement a corresponding capability.

As described above, the first network element may translate the first intent into a service procedure and/or a task scheduling policy and/or a sub-intent for processing. Therefore, a manner of invoking the capability of the at least one object by the first network element includes but is not limited to: sending specific signaling to at least a part of the at least one object, sending the task scheduling policy to at least a part of the at least one object, and/or sending the sub-intent to at least a part of the at least one object. For example, the first network element may exchange information with a corresponding NF, a corresponding AF, or another terminal device, or perform sub-intent exchange with a digital human or another NIAF. This is not specifically limited in this application. For example, the first network element may send fourth information to at least a part of the at least one object, where the fourth information describes a sub-intent of an intent, so that an intent with a complex implementation procedure can be divided into a plurality of sub-intents with a relatively simple implementation procedure, and a plurality of objects that can process the intent perform translation in parallel, to improve overall intent translation efficiency of the communication system.

It should be understood that, in embodiments of this application, "the information exchange method is for implementing the intent" means that an objective of determining the information exchange method is to implement the foregoing intent, but this is not limited to that the finally determined information exchange method can definitely implement the intent.

According to the foregoing method 500, a new network element NIAF is introduced into a network, so that only an interface from the NIAF to each functional entity needs to be defined in the network, and a scenario and a service procedure are automatically generated by the NIAF, to reduce internal procedure design complexity. In addition, the terminal device interacts with the NIAF through an intent-based interface, and the NIAF translates the intent of the terminal device into a service procedure in the network, to reduce learning costs of using the network by a terminal.

Optionally, for the method 500, after step S590, the NIAF may feed back a result of implementing the intent to the terminal device. For example, the first network element may send the fifth information to the terminal device, and correspondingly, the terminal device receives the fifth information from the first network element. The fifth information indicates the result of implementing the intent described in the first information. The fifth information may be included in an intent response message sent by the first network element to the terminal device in response to the intent request message. The intent response message may include, for example, whether the intent is successfully implemented, a quantized implementation effect (for example, a percentage of reaching an expected value), and a reason why a part of the intent is not successfully implemented. The intent response message may alternatively include an attachment object for further describing the result of implementing the intent, including but not limited to a text, an image, a video, and the like. Optionally, the foregoing feedback step may be repeatedly performed. For example, the first network element may feed back an intent execution progress to the terminal device in a manner such as an event notification at any time in an intent implementation process. In this way, the terminal device can obtain the feedback of the intent in a timely manner, to improve user experience.

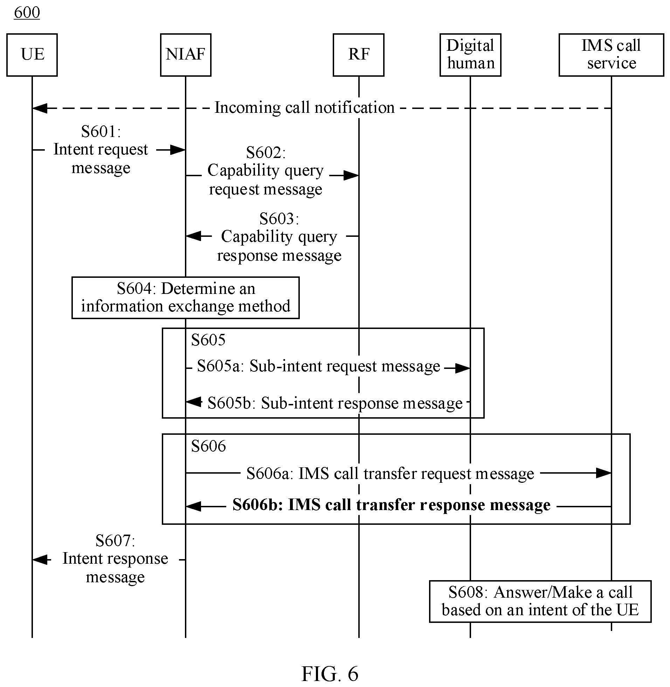

The following describes, by using FIG. 6 to FIG. 10, application of the foregoing method 500 in different scenarios in five specific embodiments.

Embodiment 1: A service scenario is that a user entrusts a digital human with a call answering task via an NIAF. A specific procedure is a method 600 shown in FIG. 6.

Optionally, before the method 600 starts, an IMS call service sends an incoming call notification to UE.

S601: The UE sends an intent request message to the NIAF.

For example, the user sends the intent request message to the NIAF via the UE. Content of an intent description in the intent request message may be "entrusting the digital human to answer a call on behalf of the user". The intent description may further include a policy of answering a call. For example, if an express is delivered, a courier is prompted to put the express at the door; if a call is from an educational institution that has been contacted before, key information is recorded, and the UE is notified by using an SMS message. If there is much information content of the policy of answer a call, the information content may alternatively be provided as an attachment included in the intent request message in a manner such as text. Optionally, the intent description may further include entrusting the digital human to make an outgoing call on behalf of the user. In this case, time when an intent takes effect may be restricted based on an intent context, for example, making an outgoing call according to the policy at a specific time. Details are not described in this embodiment.

S602: The NIAF sends a capability query request message to an RF.

For example, after receiving the intent request message, the NIAF identifies that the intent requires the digital human and the IMS call service to complete a task together. Therefore, the NIAF sends the capability query request message to the RF, to obtain a capability and a capability invoking method of the digital human and a capability and a capability invoking method of the IMS call service. Optionally, if the NIAF cannot identify or translate the intent, the NIAF may alternatively send the intent to the IKB for identification and/or translation. For a specific process, refer to the descriptions of related steps in the foregoing method 500. Details are not described herein again.

S603: The RF sends a capability query response message to the NIAF.

For example, in response to the capability query request message, the RF queries, from a capability template of an object on which capability registration has been performed, capability templates of objects whose object names are "digital human" and "IMS call service", to obtain respective capabilities of the digital human and the IMS call service and an invoking method corresponding to each capability, and returns, to the NIAF, a capability and a capability invoking method that are needed.

S604: The NIAF determines an information exchange method.

For example, the NIAF translates an intent of the user into a corresponding service procedure based on the capability of the digital human and the capability the IMS call service, and the service procedure includes sub-intent exchange between the NIAF and the digital human and information exchange between the NIAF and the IMS call service.

S605: Sub-intent exchange between the NIAF and the digital human.

For example, S605a: The NIAF sends a sub-intent request message to the digital human based on the service procedure, to notify the digital human of a response policy for answering a call. S605b: The digital human sends a sub-intent response message to the NIAF, to feed back a result of identifying the sub-intent.

S606: Information exchange between the NIAF and the IMS call service.

For example, in S606a, the NIAF sends an IMS call transfer request message to the IMS call service based on the service procedure, to configure the IMS call service, so that the IMS transfers a specific incoming call from the UE to the digital human; and in S606b, the IMS call service sends an IMS call transfer response message to the NIAF, and feeds back a configuration result of the IMS call service.

S607: The NIAF sends an intent response message to the UE.

For example, the NIAF sends the intent response message to the UE, to feed back an intent fulfillment result.

S608: The digital human and the IMS call service answer/make a call based on the intent of the UE.

For example, the IMS call service transfers a specific incoming call to the digital human, and the digital human answers the specific incoming call and give a response on behalf of the user according to the response policy expressed in the intent.

In the foregoing embodiment, the UE only needs to send the intent to the NIAF, and the NIAF automatically translates the intent into the corresponding service procedure, to implement the intent of the UE, so as to simplify an interface for interaction between the UE and a network without needing to introduce new service procedure design and development.

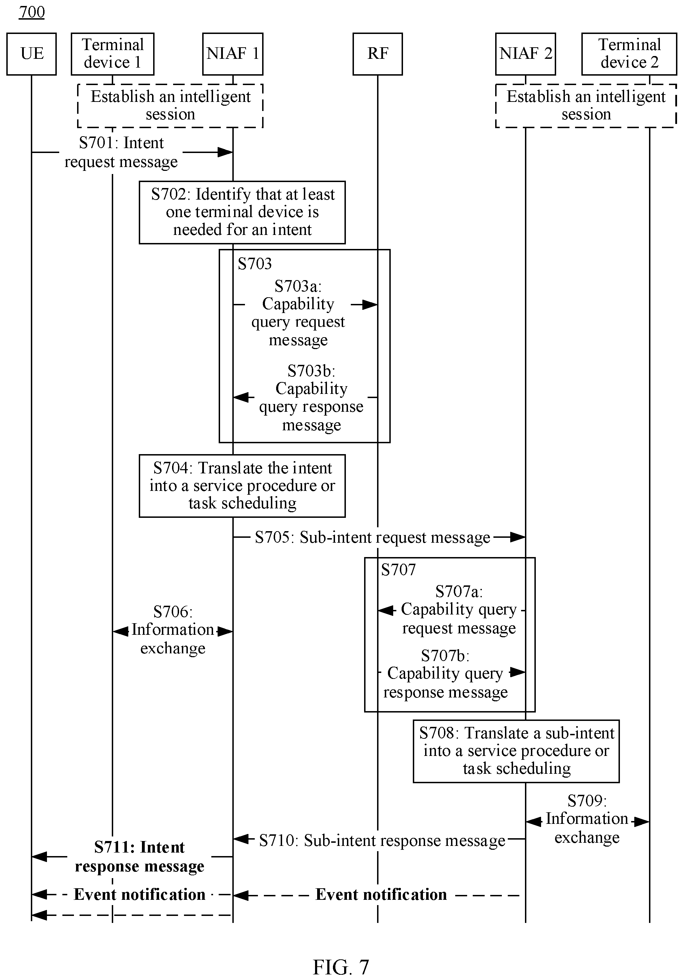

Embodiment 2: A service scenario is that an NIAF receives an intent of UE, and drives a plurality of terminal devices to complete a task target to implement the intent, so that the terminal devices are as intelligent as to sense an intent of a user. A specific procedure is a method 700 shown in FIG. 7.

Optionally, a terminal device 1 (for example, a smart electric vehicle) and a terminal device 2 (for example, a home control center) establish intelligent sessions with different NIAFs. For example, before the method 700 starts, the terminal device 1 located in a city 1 may have established an intelligent session with the NIAF 1, and the terminal device 2 located in a city 2 may have established an intelligent session with an NIAF 2.

S701: The UE sends an intent request message to the NIAF 1.

For example, the user sends the intent request message to the NIAF 1 via the UE, and content of an intent description in the intent request message may be "drive back to the city 2 at 2 p.m., and hope that the temperature in the car on the road and the indoor temperature of the home are 26 degrees".

S702: The NIAF 1 identifies that the intent needs to be completed by at least one terminal device.

For example, after receiving the intent request message, the NIAF 1 determines, based on a local intent knowledge base, that the intent requires the terminal device 1 and the terminal device 2 to complete a task together.

S703: Information exchange between the NIAF 1 and an RF.

For example, S703a: The NIAF 1 sends a capability query request message to the RF, to obtain a capability and a capability invoking method of the terminal device 1, a capability and a capability invoking method of the terminal device 2, and information about binding between the terminal device and the NIAF. It should be understood that the terminal device is different from an object of another type such as an NF, an AF, or a digital human, and the terminal device needs to exchange information with another entity in a network via an NIAF that establishes an intelligent session. Therefore, to invoke a capability of the terminal device, a NIAF with which the terminal device establishes the intelligent session further needs to be queried. S703b: The RF sends a capability query response message to the NIAF 1, and returns a query result to the NIAF 1.

S704: The NIAF 1 translates the intent into a service procedure or task scheduling.

For example, the NIAF 1 translates the intent of the user into a corresponding service procedure or task scheduling policy based on the capability of the terminal device 1 and the capability of the terminal device 2. Because the NIAF 1 can determine, based on a capability query result of the terminal device 2, that an intelligent session binding relationship exists between the terminal device 2 and the NIAF 2, a result of translating the intent by the NIAF 1 is divided into two parts: one part is a procedure of exchanging information with the terminal device 1 by the NIAF 1, and the other part is a sub-intent that is transferred by the NIAF 1 to the NIAF 2 and that is for controlling the terminal device 2, to request the NIAF 2 to implement a final control and information exchange procedure for the terminal device 2.

S705: The NIAF 1 sends a sub-intent request message to the NIAF 2.

For example, the NIAF 1 can determine, based on the intent description and location information of the user in the intent request message, that the user arrives at home of the city 2 at about 17:00. Therefore, content of an intent description of the sub-intent may be "the user arrives at home at about 17:00, and the indoor temperature is expected to be controlled at 26 degrees".

S706: Information exchange between the NIAF 1 and the terminal device 1.

For example, the NIAF 1 controls the terminal device 1 and exchanges information with the terminal device 1 based on an intent translation result and obtained capability information of the terminal device 1. For example, the NIAF 1 controls, by using an air conditioner control application programming interface (application programming interface, API) of the terminal device 1, the terminal device 1 to turn on an air conditioner in a vehicle at 13:50 (in other words, 10 minutes before estimated driving time of the user expressed in the intent) and set a temperature to 26 degrees.

S707: Information exchange between the NIAF 2 and the RF.

For example, S707a: After receiving the sub-intent request message, the NIAF 2 identifies that the sub-intent needs to control the terminal device 2 to complete a task. Therefore, the NIAF 2 sends a capability query request message to the RF, to obtain the capability and the capability invoking method of the terminal device 2. S707b: The RF sends a capability query response message to the NIAF 2, and returns a query result to the NIAF 2, for example, whether the terminal device 2 has a temperature control capability and a remote API invoking method.

S708: The NIAF 2 translates the sub-intent into a service procedure or task scheduling.

For example, the NIAF 2 translates the sub-intent into a corresponding service procedure or task scheduling policy based on the capability of the terminal device 2.

S709: Information exchange between the NIAF 2 and the terminal device 2.

For example, the NIAF 2 controls the terminal device 2 and exchanges information with the terminal device 2 based on a sub-intent translation result and obtained capability information of the terminal device 2. For example, the NIAF 2 invokes an API of the terminal device 2 to control an air conditioner at home to turn on the air conditioner in the vehicle at 16:45 (in other words, 15 minutes before time at which the user is expected to arrive at home expressed in the sub-intent) and set a temperature to 26 degrees. Alternatively, the NIAF 2 may translate the sub-intent into the task scheduling policy. For example, the NIAF 2 sends information only to the terminal device 2, and sets the indoor temperature at 17:00 to 26 degrees, and the terminal device 2 determines, according to the task scheduling policy, specific intelligent devices need to be scheduled at home and how to perform scheduling. Details are not described in this embodiment.

S710: The NIAF 2 sends a sub-intent response message to the NIAF 1.

For example, the NIAF 2 sends the sub-intent response message to the NIAF 1, to feed back that the sub-intent has been successfully executed.

S711: The NIAF 1 sends an intent response message to the UE.

For example, the NIAF 1 sends the intent response message to the UE, to feed back that the intent is ready.

It should be understood that, in the foregoing procedure, the information exchange between the NIAF 1 and the terminal device 1, the information exchange between the NIAF 2 and the terminal device 2, and the information exchange between the NIAF 1 and the NIAF 2 are sustainable, and an execution status of the intent or the sub-intent may be fed back to the UE at any time in a manner such as an event notification. For example, the NIAF 1 and the NIAF 2 can always monitor respective task execution statuses of the terminal device 1 and the terminal device 2, for example, a change of a current temperature value of the air conditioner and whether the air conditioner is faulty.

In the foregoing embodiment, the UE expresses, to the NIAF, the intent that the plurality of terminal devices need to cooperate to complete the task. The NIAF automatically translates the intent into the corresponding service procedure or task scheduling. A plurality of NIAFs drive the plurality of terminal devices to cooperate to implement the intent according to the capability invoking method of the terminal device provided in a registered capability template. Each NIAF interacts with a terminal device through an intent-based interface, and the plurality of NIAFs cooperate to complete a task in a manner of sub-intent exchange. This simplifies interfaces for interaction between the NIAFs, and does not need to introduce new service procedure design and development.

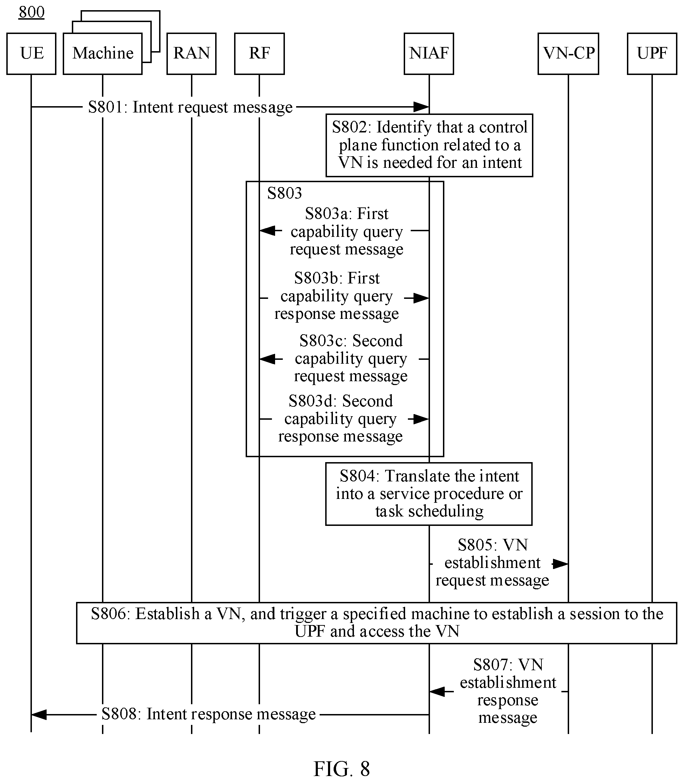

Embodiment 3: A service scenario is that an NIAF receives an intent of UE, to establish a virtual network for a group of machine devices. A specific procedure is a method 800 shown in FIG. 8.

Optionally, the "machine" or the "machine device" mentioned in this embodiment is one type of terminal device. Therefore, before the method 800 starts, a plurality of machine devices have registered with a network and established an intelligent session with the NIAF.

S801: The UE sends an intent request message to the NIAF.

For example, a user sends the intent request message to the NIAF via the UE. Content of an intent description in the intent request message may be "establishing a virtual local area network (local area network, LAN) for a specified machine member". Optionally, a list of specific machine members participating in networking may be provided in a text manner as an attachment included in the intent request message.

S802: The NIAF identifies that the intent needs to be completed by a control plane function related to the virtual network (virtual network, VN).

S803: Information exchange between the NIAF and an RF.

For example, S803a: The NIAF sends a first capability query request message to the RF, to obtain a capability template of each machine participating in networking. S803b: The RF sends a first capability query response message to the NIAF, where the first capability query response message includes but is not limited to a capability and a capability invoking method of each machine and information about binding between each machine and the NIAF. S803c: The NIAF sends a second capability query request message to the RF, to obtain a capability template of an NF related to the VN. S803d: The RF sends a second capability query response message to the NIAF, where the second capability query response message includes but is not limited to a capability and a capability invoking method of a VN-related control plane (VN control plane, VN-CP).

S804: The NIAF translates the intent into a service procedure or task scheduling.

S805: The NIAF sends a VN establishment request message to the VN-CP.

For example, the NIAF sends the VN establishment request message to the VN-CP according to an invoking method for VN creation provided in an obtained capability template of the VN-CP. The VN establishment request message may include an ID list of machine members that need to be interconnected via the VN.

S806: The VN-CP creates the VN, and triggers a specified machine device to establish a session to a user plane function (user plane function, UPF) network element and access the VN.

For example, the VN-CP initiates a VN creation procedure, creates a VN member group including all machines on a user data management function (for example, a unified data management function (unified data management, UDM)), creates a virtual LAN (for example, a 5G LAN) switching instance on the UPF, and triggers all the machines to establish sessions to the UPF and access the created virtual LAN instance. For all procedures in this step, refer to an existing standard, for example, a standardized procedure defined in a 3GPP 5G LAN. This is not specifically limited in this embodiment.

S807: The VN-CP sends a VN establishment response message to the NIAF.

For example, after creating the virtual LAN, the VN-CP feeds back a VN establishment result by using the VN establishment response message.

S808: The NIAF sends an intent response message to the UE.

For example, the NIAF sends the intent response message to the UE, and feeds back an intent execution result, for example, the VN is successfully created for a plurality of target machines.

In the foregoing embodiment, the UE expresses, to the NIAF, the intent of establishing the virtual network for a group of machine devices, and the NIAF automatically translates the intent into a corresponding service procedure, to drive the control plane function and/or the user plane function to create the virtual network for a specified group of machines, so that the machines access the virtual network to complete mutual communication. This enriches types of objects that the NIAF can drive without needing to introduce new service procedure design and development.

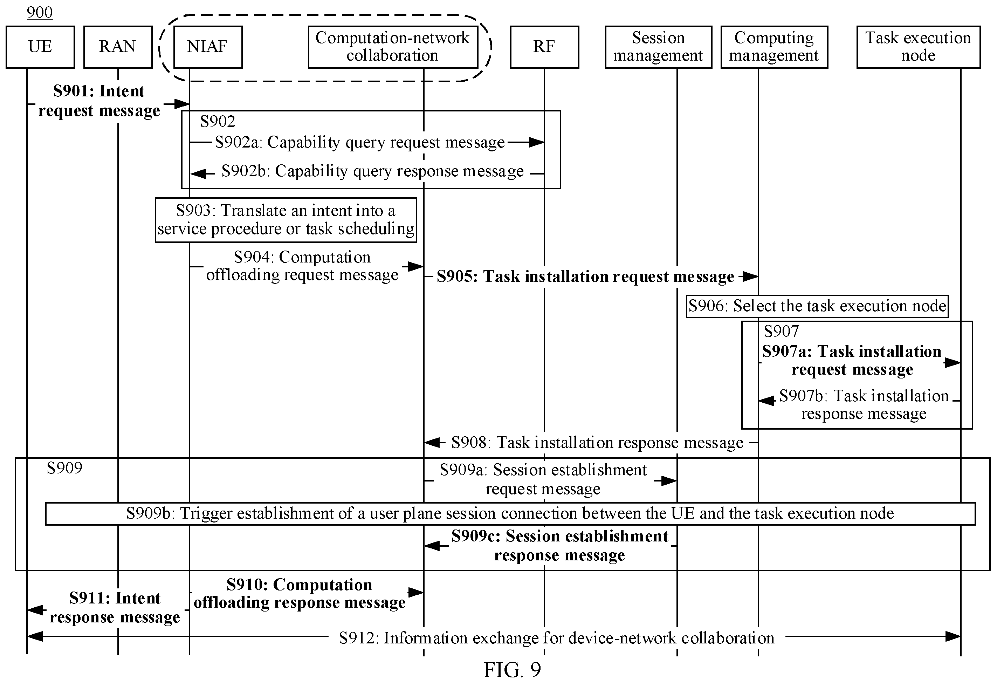

Embodiment 4: A service scenario is that an NIAF receives an intent of UE, and drives a network to select and deploy a task execution node, to enable a compute task of the UE to be offloaded to the network for execution, so as to implement computing capability expansion of the UE. A specific procedure is a method 900 shown in FIG. 9.

S901: The UE sends an intent request message to the NIAF.

For example, a user sends the intent request message to the NIAF via the UE. Content of an intent description in the intent request message may be "offloading a compute task of a terminal". Optionally, a code image package or a download address of a compute task that needs to be offloaded may be provided as an attachment included in the intent request message.

S902: Information exchange between the NIAF and an RF.

For example, after receiving the intent request message, the NIAF identifies that the intent requires a computation-network collaboration network function and a network function related to a computing service to complete a task together. Therefore, S902a: The NIAF sends a capability query request message to the RF, to obtain a capability template for computation-network collaboration and search for a capability template of an NF related to the computing service. S902b: The RF sends a first capability query response message to the NIAF, where the first capability query response message includes but is not limited to a capability and a capability invoking method for computation-network collaboration and a capability and a capability invoking method for computing management.

S903: The NIAF translates the intent into a service procedure or task scheduling.

For example, the NIAF translates an intent of the user into a corresponding service procedure or task scheduling based on a local intent knowledge base, capability information for the computation-network collaboration, and capability information for the computing management. In this embodiment, the service procedure is mainly to drive a computation-network collaboration function to implement offloading of the compute task of the terminal.

S904: The NIAF sends a computation offloading request message to the computation-network collaboration.

For example, the NIAF sends the computation offloading request message to the computation-network collaboration function based on the service procedure. The computation offloading request message may further include a code image package or a download address of a compute task that needs to be offloaded. The computation-network collaboration function, based on the computation offloading request message, divides a computation offloading task into two steps: compute task installation and execution and session establishment. It should be understood that, in some possible implementations, the computation-network collaboration function may alternatively be implemented by the NIAF. In this case, the NIAF does not need to send the foregoing computation offloading request message and subsequently does not need to receive a computation offloading response message. Details are not described in this embodiment.

S905: The computation-network collaboration sends a task installation request message to the computing management.

For example, the task installation request message may include a UE ID, a UE location, a code image package or a download address of the compute task, and the like.

S906: The computing management selects a task execution node.

For example, a computing management task selects, based on information such as the UE location, a compute task type, a requirement for a software and hardware execution environment, and a resource usage status of a current compute node, the task execution node that meets the task.

S907: The computing management exchanges information with the task execution node.

For example, S907a: The computing management module sends a task installation request message to the task execution node, where the task installation request message includes the code image package of the compute task, to indicate a selected task execution node to download and install a code image, and instantiate the compute task. S907b: The task execution node sends a task installation response message to the computing management, and feeds back an IP address and a port number of a task execution node in which the compute task is located or an accessible uniform resource locator (uniform resource locator, URL), to facilitate subsequent addressing and access between the UE and an offloaded compute task.

S908. The computing management sends the task installation response message to the computation-network collaboration.

For example, the task installation response message may include an ID, the IP address, and the port number of the task execution node in which the compute task is located, or an accessible URL.

S909: Information exchange between the computation-network collaboration and session management.

For example, S909a: The computation-network collaboration sends a session establishment request message to the session management, where the session establishment request message is for requesting a session management function to perform S909b to trigger establishment of a user plane session connection between the UE and the task execution node. For a specific implementation, refer to an existing communication standard, for example, a session establishment procedure between UE and a UPF defined in 3GPP. This is not specifically limited in this application. S909c: Send the session establishment request message to the computation-network collaboration to indicate a session establishment result.

S910: The computation-network collaboration sends the computation offloading response message to the NIAF, where the computation offloading response message includes but is not limited to the IP address and the port number of the task execution node in which the compute task is located or an accessible URL.

S911: The NIAF sends an intent response message to the UE, where the intent response message includes but is not limited to the IP address and the port number of the task execution node in which the compute task is located or is accessible.

S912: The UE interacts with the compute task offloaded in the task execution node, to implement computational power expansion of the UE.

In the foregoing embodiment, the UE expresses a computation offloading intent of the terminal to the NIAF, and the NIAF automatically translates the intent into a corresponding service procedure, to drive the computation-network collaboration function and the computing management function to implement running of the compute task of the terminal on an optimal task execution node in the network, to improve execution speed and precision of the compute task, and reduce battery energy consumption of the UE, which is equivalent to that the network expands a computing capability of the terminal UE. In addition, there is no need to introduce new service procedure design and development in the foregoing process.

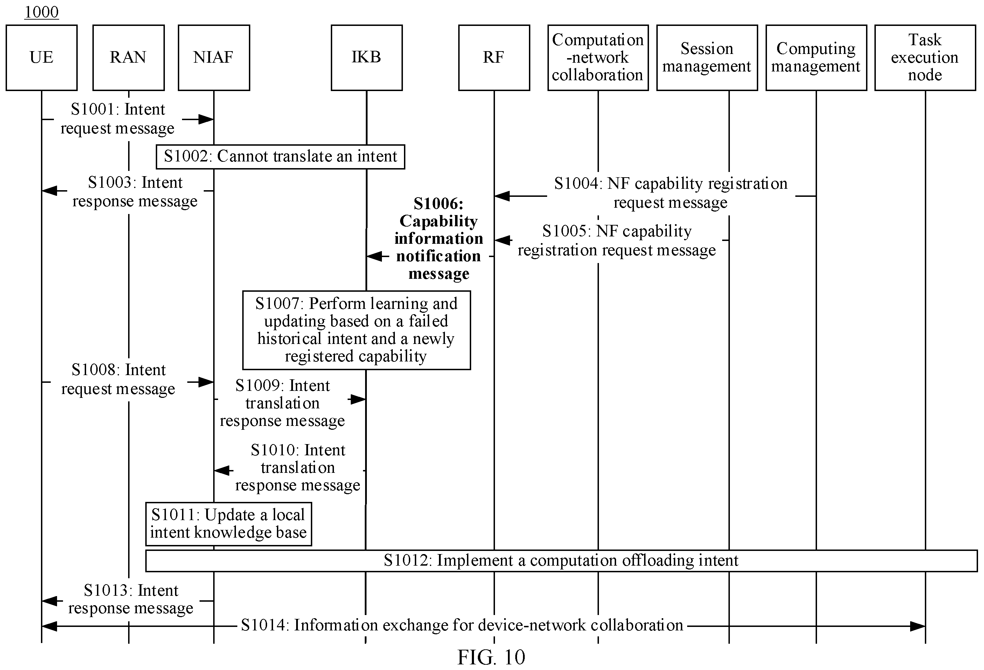

Embodiment 5: An example of an NIAF autonomously learning an intent is provided. A specific service scenario is that the NIAF learns and fulfils the intent based on a latest registered capability template. A specific procedure is a method 1000 shown in FIG. 10.

S1001: UE sends an intent request message to the NIAF.

For example, a user sends the intent request message to the NIAF via the UE. Content of an intent description in the intent request message may be "offloading a compute task of a terminal". Optionally, a code image package or a download address of a compute task that needs to be offloaded may be provided as an attachment included in the intent request message.

S1002: The NIAF and the IKB cannot translate the intent.

For example, if the NIAF cannot retrieve, based on a local intent knowledge base or the IKB, knowledge related to "offloading the task of the terminal", or cannot derive, based on a registered capability template of an object in an RF, a service procedure for implementing the intent, the NIAF determines that the intent cannot be correctly translated currently.

S1003: The NIAF sends an intent response message to the UE.

For example, the intent response message may be for feeding back, to the UE, a result that the intent currently fails to be fulfilled. The intent response message may further include a reason why the intent is not fulfilled, for example, "a registered network function lacks of a network function related to computation offloading".

S1004: Computing management sends an NF capability registration request message to the RF, where the NF capability registration request message includes a capability template for the computing management.

S1005: Computation-network collaboration sends an NF capability registration request message to the RF, where the NF capability registration request message includes a capability template for the computation-network collaboration.

For example, after step S1003 ends, a computing management function, a computation-network collaboration function, and a task execution node that are related to offloading of the compute task of the terminal are subsequently deployed in an operator network, and capability registration is performed with the RF.

S1006: The RF sends a capability information notification message to the IKB.

For example, the RF notifies the IKB of a new capability registration event. The capability information notification message includes a newly registered capability template of an object.

S1007: The IKB performs learning and updating based on a failed historical intent and a newly registered capability.

For example, the IKB learns, based on a historical record of a previously unfulfilled intent and a newly registered capability template, how to fulfill the failed intent and update the intent knowledge base for subsequent identification and translation of a same or similar intent. It should be understood that a method for learning intent knowledge and updating the intent knowledge by the IKB is related to an implementation of the IKB. This is not specifically limited in this application. For details, refer to the descriptions related to updating of the local intent knowledge base of the NIAF in the foregoing method 500. Details are not described herein again.

S1008: The UE sends an intent request message to the NIAF.

For example, the user sends the intent request message to the NIAF again via the UE. Content of an intent description is still "offloading a compute task of the terminal".

S1009: The NIAF sends an intent translation request message to the IKB.

For example, because the local intent knowledge base of the NIAF is not updated, the NIAF still cannot correctly translate the intent currently. Therefore, the NIAF requests the IKB to assist in identifying and translating the intent.

S1010: The IKB sends an intent translation response message to the NIAF.

For example, because the IKB has learned how to process a computation offloading-related intent of the terminal for the newly added capability template, the IKB can translate the foregoing intent, and feed back a translation result to the NIAF.

S1011: The NIAF updates the local intent knowledge base.

For example, the NIAF updates the local intent knowledge base based on the translation result.

S1012: Implement the computation offloading intent.

For example, the NIAF may drive, based on a service procedure in the translation result, the computation-network collaboration function, the computing management function, and the task execution node to complete computing offloading of the terminal. For a specific implementation, refer to the descriptions of related steps in Embodiment 4. Details are not described herein again.

S1013: The NIAF sends an intent response message to the UE, where the intent response message includes but is not limited to an IP address and a port number of a task execution node in which the compute task is located or is accessible.

S1014: The UE interacts with the compute task offloaded in the task execution node, to implement computational power expansion of the UE.

In the foregoing embodiment, the NIAF and the IKB can learn, based on a newly registered capability set and the unfulfilled historical intent, how to fulfill the intent, and update the local image library knowledge and the IKB of the NIAF, to improve a success rate of intent identification and translation, so that the NIAF is more and more understandable, and there is no need to add new service procedure design and development.

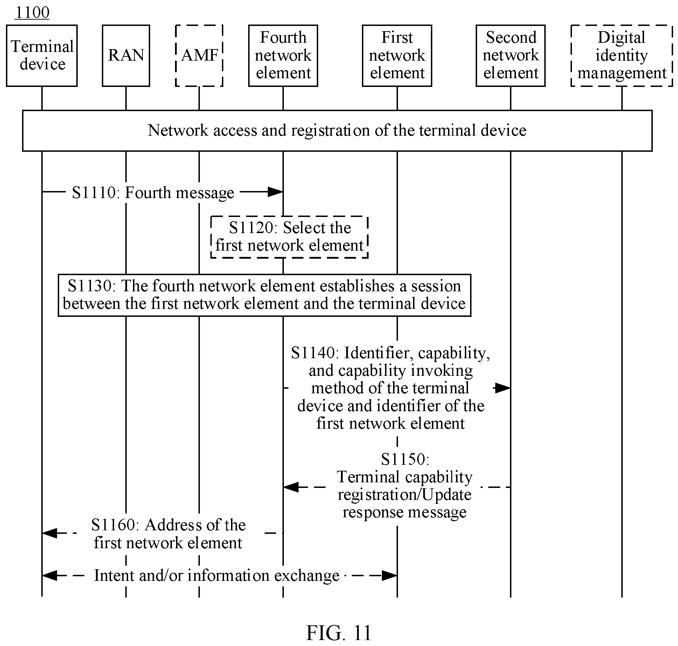

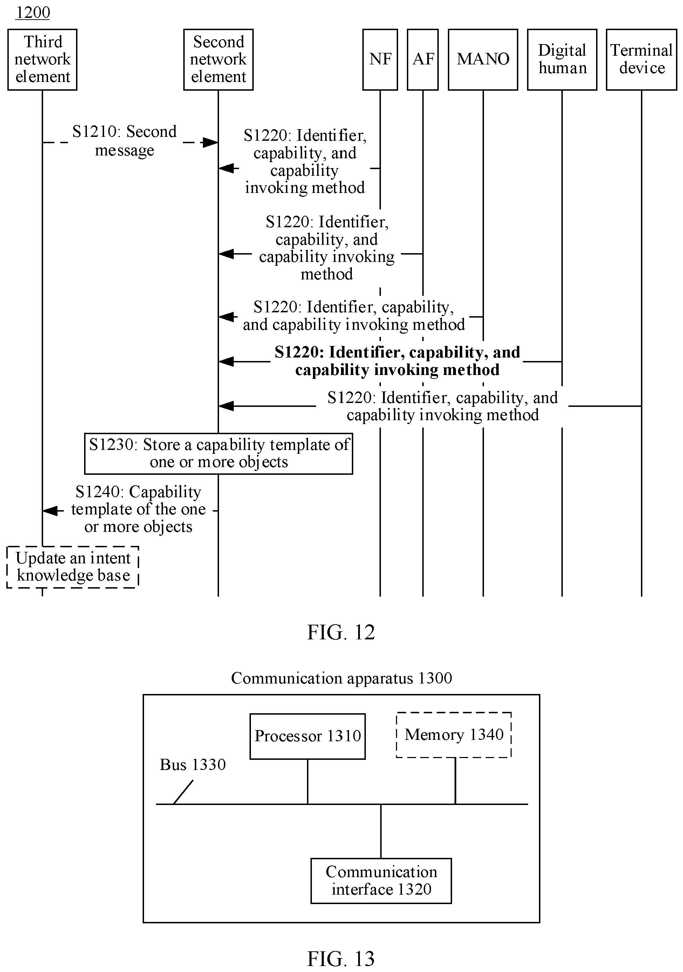

The foregoing describes, with reference to FIG. 5 to FIG. 10, the communication method for translating an intent sent by a terminal device into a service procedure or task scheduling according to embodiments of this application. The following describes, with reference to FIG. 11 and FIG. 12, another two communication methods that are based on the communication system provided in embodiments of this application and that are related to implementation of the foregoing method 500.

In some possible implementations, a terminal device can determine a suitable NIAF via an ISMF, and establish an intelligent session with the NIAF, so that the terminal device can subsequently perform intent exchange with the NIAF. In this case, FIG. 11 is a schematic flowchart of a communication method 1100 according to an embodiment of this application, so that the terminal device establishes an intelligent session with the NIAF via the ISMF. Optionally, the method shown in FIG. 11 may be applied to the communication system 400 shown in FIG. 4. Optionally, the method shown in FIG. 12 may be performed before the method shown in FIG. 5.

It should be understood that, before the method shown in FIG. 11 is performed, the terminal device may have completed a network access and registration process. For example, the terminal device initiates a registration request message to an access management function (access and mobility management function, AMF). The message may include a UE ID (for example, an IMSI in 4G and a SUPI/SUCI/GUTI in 5G) and a security credential that are needed in the network access and registration procedure. The AMF interacts with a digital identity management function to complete identity authentication and verification of the terminal device. The AMF returns a registration response message to the terminal device. The message may include a temporary ID, for example, a TMSI/GUTI, allocated by a network to the terminal device. The network access and registration procedure of the terminal device may alternatively be another implementation. For example, refer to a network access and registration method of a terminal device in an existing 5G protocol. This is not specifically limited in this application.

As shown in FIG. 11, the method includes the following steps.

Step S1110: The terminal device sends a fourth message to a fourth network element. Correspondingly, the fourth network element receives the fourth message from the terminal device.

The fourth network element may be an ISMF, for example, the ISMF 440 shown in FIG. 4. Specifically, the fourth message is for requesting to establish a session. In this embodiment of this application, a session established between the NIAF and the terminal device may also be referred to as an intelligent session. Therefore, the fourth message may also be referred to as an intelligent session establishment request message. The fourth message may include a UE ID and an identifier, a capability, and a capability invoking method of the terminal device. It should be understood that, in some possible implementations, the UE ID may alternatively be used as the identifier of the terminal device. This is not specifically limited in this application. Optionally, the fourth message may further include location information of the terminal device, where the location information indicates a geographical location of the terminal device.

Optionally, the method 1100 may include step S1120.

Step S1120: The fourth network element selects a first network element based on the fourth message.

The first network element is configured to implement an intent through information exchange with at least one object. For example, the first network element is an NIAF, for example, the NIAF 410 shown in FIG. 4. Specifically, for example, when there are a plurality of available NIAFs, the ISMF can select, based on intelligent session establishment request message, a suitable NIAF from the plurality of NIAFs to establish a session with the terminal device. The selected NIAF is referred to as a first network element.

For example, the ISMF may select the first network element based on the location information of the terminal device. For example, the first network element may be an NIAF that is in the plurality of NIAFs and that is closest to the geographical location of the terminal device. Therefore, a rate of information exchange between the terminal device and the NIAF is increased, and/or signal strength for the exchange is improved.

It should be understood that the foregoing two manners of selecting an NIAF are merely examples for description. The ISMF may alternatively select a suitable NIAF based on another standard. This is not specifically limited in this application.

Step S1130: The fourth network element establishes a session between the first network element and the terminal device.

For example, the ISMF may establish a connection from the terminal device to a RAN and then to the NIAF. The connection may include a connection between the terminal device and the RAN (for example, a radio resource control (radio resource control, RRC) connection) and a connection from the RAN to the NIAF (for example, a general packet radio service (general packet radio service, GPRS) tunneling protocol for the user plane (GPRS tunneling protocol for the user plane, GTP-U) tunnel connection). For a specific procedure, refer to a session establishment procedure between a terminal device and a UPF in the 3GPP TS23502 protocol. The UPF in the foregoing procedure may be replaced with the NIAF in the procedure of this application. Details are not described in this embodiment again. In a session establishment process, the NIAF or the ISMF allocates addresses (or referred to as communication identifiers) of the terminal device and the NIAF, for example, an IP address of the terminal device or an IP address of an NIAF instance. The address may further include a port number corresponding to the NIAF instance.

Step S1140: The fourth network element sends the identifier, the capability, and the capability invoking method of the terminal device and an identifier of the first network element to a second network element. Correspondingly, the second network element receives the identifier, the capability, and the capability invoking method of the terminal device and the identifier of the first network element from the fourth network element.

The second network element may be an RF, for example, the RF 420 shown in FIG. 4. Specifically, if the terminal device establishes an intelligent session for the first time, the identifier, the capability, and the capability invoking method of the terminal device and the identifier of the first network element may be included in a terminal capability registration request message, where the terminal capability registration request message is for requesting to register capability information of the terminal device with the second network element. If the terminal device establishes an intelligent session not for the first time, the identifier, the capability, and the capability invoking method of the terminal device and the identifier of the first network element may be included in a terminal capability update request, where the terminal capability update request is for requesting the second network element to update capability information of the terminal device. The identifier of the first network element may be, for example, a name of the NIAF or an ID of the NIAF. This is not specifically limited in this application.

Optionally, the method 1100 may further include step S1150.

Step S1150: The second network element sends a terminal capability registration/update response message to the fourth network element. Correspondingly, the fourth network element receives the terminal capability registration/update response message from the second network element.

For example, the second network element stores the capability information of the terminal device in response to a terminal capability registration/update request message, and sends the terminal capability registration/update response message, to indicate a capability registration result of the terminal device.

In some possible implementations, a capability template of the terminal device may include information about binding between the terminal device and the NIAF, where the information about binding indicates the identifier of the first network element that establishes an intelligent session with the terminal device. In this case, a specific manner in which the second network element stores the capability information of the terminal device may be: The second network element stores the capability template of the terminal device, where the capability template of the terminal device includes the identifier, the capability, and the capability invoking method that are of the terminal device and the identifier of the first network element.

In some other possible implementations, the information about the binding between the terminal device and the NIAF may not be included in the capability template, and the capability template of the terminal device and a corresponding identifier of the first network element are separately stored. In this case, a specific manner in which the second network element stores the capability information of the terminal device may be: storing the capability template of the terminal device and the identifier of the first network element, where the capability template of the terminal device includes the identifier, the capability, and the capability invoking method that are of the terminal device, and the capability template of the terminal device corresponds to the identifier of the first network element.

Optionally, the method 1100 may further include step S1160.

Step S1160: The fourth network element sends an address of the first network element to the terminal device. Correspondingly, the terminal device receives the address of the first network element from the fourth network element.

For example, the address of the first network element may be included in an intelligent session establishment response message sent by the fourth network element to the terminal device in response to the intelligent session establishment request message. The intelligent session establishment response message is for feed backing an intelligent session establishment result. The intelligent session establishment response message may further include the address allocated to the terminal device. The address of the first network element may be, but not limited to, the IP address of the NIAF instance and/or the port number of the NIAF instance. The address of the terminal device may be, but not limited to, the IP address of the terminal device, or any other communication identifier that can enable the terminal device to exchange information with the first network element. A form of the communication identifier is not specifically limited in this application.

Optionally, the address of the first network element may be received by the fourth network element before the intelligent session establishment response message is sent. For example, the fourth network element may receive the address of the first network element in step S1130, to be specific, in a session establishment process, the addresses allocated by the NIAF or the ISMF to the terminal device and the NIAF. The fourth network element may receive the address of the first network element after step S1130, and the fourth network element requests the first network element or another network element to obtain the address. This is not specifically limited in this application.

In this way, the terminal device can perform intent interaction and information exchange with the first network element, including but not limited to that the terminal device may send an intent to the first network element, and/or the first network element implements information exchange and control on the terminal device based on the capability template of the terminal device.

According to the method 1100, the ISMF enables the terminal device to establish an intent-driven endogenous intelligent session with the NIAF, so that the terminal device can interact with the network through an intent-based interface, to reduce learning costs of using the network by a terminal.

In some possible implementations, various types of objects that may be invoked by the NIAF may register capabilities with the RF, and the RF can send a newly registered capability to the IKB in a subscription notification manner to learn intent knowledge. In this case, FIG. 12 is a schematic flowchart of a communication method 1200 according to an embodiment of this application. The communication method 1200 is used by the various types of objects to perform capability registration with the RF. Optionally, the method shown in FIG. 12 may be applied to the communication system 400 shown in FIG. 4. Optionally, the method shown in FIG. 12 may be performed before the method shown in FIG. 5.

As shown in FIG. 12, the method includes the following steps. It should be understood that the following step S1210 and step S1240 are optional steps, and step S1210 is associated with S1240. To be specific, if the optional step S1210 is performed before step S1220, correspondingly, after step S1230 is performed, the optional step S1240 is performed. Alternatively, neither step S1210 nor step S1240 is performed, and only step S1220 and step S1230 are performed.

Step S1210: A third network element sends a second message to a second network element. Correspondingly, the second network element receives the second message from the third network element.

The second network element may be an RF, for example, the RF 420 shown in FIG. 4. The third network element may be an IKB, for example, the IKB 430 shown in FIG. 4. Specifically, the second message is for subscribing to a capability template of an object, for example, a capability template of an object that performs capability registration with the second network element. Therefore, the second message may also be referred to as a capability subscription message. After the third network element subscribes to the capability information from the second network element, when a new capability registration event occurs, the second network element notifies the third network element. The capability registration event may include but is not limited to: registering a capability for a new object, registering a new capability for a registered object, updating a registered capability for a registered object, and/or the like.

Step S1220: The second network element receives an identifier, a capability, and a capability invoking method of one or more objects.

Specifically, the identifier, the capability, and the capability invoking method of the one or more objects may be included in a capability registration request message, and the capability registration request message is for requesting to perform capability registration with the second network element. Based on different object types, the capability registration request message may include but is not limited to an NF capability registration request message, an AF capability registration request message, a management and network orchestration (management and network orchestration, MANO) capability registration request message, a digital human capability registration request message, a terminal capability registration request message, and the like.

The capability registration request message may include but is not limited to the following information: an object type, for example, NF, AF, call application, digital human, or terminal device; an identifier of an object, where the identifier is for identifying the object, and may alternatively be for identifying an instance of the object when the object is a virtual entity, for example, the identifier of the object may be a name of the object; an address of an object, for example, a fully qualified domain name (fully qualified domain name, FQDN) or an IP address, used for object addressing; one or more capabilities of an object, where when the object has a plurality of capabilities, the plurality of capabilities may be represented in a form of a capability list; and a capability invoking method for each capability, for example, an API name and an API invoking method. If an object is a terminal device, the capability registration request message may further include information about binding between the terminal device and an NIAF, and the information about binding indicates an NIAF that establishes an intelligent session with the terminal device, for example, an identifier of the foregoing NIAF that establishes a session with the terminal device. Optionally, all the foregoing information may be used as information in the capability template of the object.

Step S1230: The second network element stores a capability template of the one or more objects.

Specifically, the second network element records capability templates registered by various types of objects, and the capability template may be for subsequent query of a capability of an object. The capability template of the object includes at least an identifier, a capability, and a capability invoking method of the object. Optionally, the capability template of the object may further include other information, for example, information may be included in the capability registration request information used as an example in step S1220, including but not limited to an object type, an object FQDN, an object IP address, and the like. Alternatively, the capability template of the object may include any other information. This is not specifically limited in this application.

Step S1240: The second network element sends the capability template of the one or more objects to the third network element. Correspondingly, the third network element receives the capability template of the one or more objects from the second network element.

For example, the capability template of the one or more objects may be included in a capability information notification message sent by the second network element to the third network element. The capability information notification message is for notifying the third network element of a newly registered capability template subscribed to by the third network element. The capability template of the one or more objects means the capability template stored by the second object after the second network element receives the capability subscription message from the third network element. In this way, after receiving the capability template of the one or more objects, the third network element can learn, based on the newly registered capability template, an intent that can be fulfilled, and update the IKB based on a learning result. For a specific update manner, refer to the descriptions of related content of updating the local intent knowledge base of the NIAF in S580 in the foregoing embodiment. Details are not described herein again.

According to the method 1200, the RF can implement capability registration of a plurality of types of objects, so that the NIAF or the IKB learns a fulfillable intent and constructs an intent knowledge base, to improve an effect of translating an intent of the terminal device into a specific service procedure or a specific task scheduling policy.

Finally, apparatus embodiments in embodiments of this application are described.

To implement functions in the methods provided in this application, the first network element, the second network element, the third network element, and the fourth network element each may include a hardware structure and/or a software module, and the foregoing functions are implemented in a form of a hardware structure, a software module, or a combination of a hardware structure and a software module. Whether a function in the foregoing functions is performed by the hardware structure, the software module, or the combination of the hardware structure and the software module depends on particular applications and design constraint conditions of the technical solutions.

FIG. 13 is a block diagram of a communication apparatus 1300 according to an embodiment of this application. The communication apparatus 1300 includes a processor 1310 and a communication interface 1320. The processor 1310 and the communication interface 1320 may be connected to each other through a bus 1330. The communication apparatus 1300 may be at least one of the foregoing first network element, the foregoing second network element, the foregoing third network element, or the foregoing fourth network element.

Optionally, the communication apparatus 1300 may further include a memory 1340. The memory 1340 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1340 is configured to store related instructions and data.

The processor 1310 may be one or more central processing units (central processing unit, CPU). When the processor 1310 is one CPU, the CPU may be a single-core CPU, or may be a multi-core CPU.

When the communication apparatus 1300 is the first network element, for example, the communication apparatus 1300 is configured to perform the following operation: invoking a capability of at least one object according to an information exchange method, and the like.

When the communication apparatus 1300 is the second network element, for example, the communication apparatus 1300 is configured to perform the following operation: receiving a message for requesting a capability and a capability invoking method of at least one object, and the like.

When the communication apparatus 1300 is the third network element, for example, the communication apparatus 1300 is configured to perform the following operation: determining an information exchange method between a first network element and at least one object based on a capability and a capability invoking method of at least one object, and the like.

When the communication apparatus 1300 is the fourth network element, for example, the communication apparatus 1300 is configured to perform the following operation: establishing a session between a terminal device and a first network element, and the like.

The foregoing content is merely used as an example for description. When the communication apparatus 1300 is at least one of the foregoing first network element, the foregoing second network element, the foregoing third network element, or the foregoing fourth network element, the communication apparatus 1300 is responsible for performing a method or a step related to at least one of the foregoing first network element, the foregoing second network element, the third network element, or the foregoing fourth network element in the foregoing method embodiments.

The foregoing descriptions are merely examples. For specific content, refer to the content shown in the foregoing method embodiments. For implementation of each operation in FIG. 13, refer to corresponding descriptions in the method embodiments shown in FIG. 5 to FIG. 12.

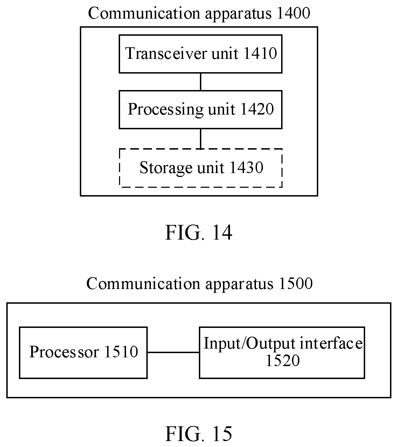

FIG. 14 is a block diagram of a communication apparatus 1400 according to an embodiment of this application. The communication apparatus 1400 may be at least one of the foregoing first network element, the foregoing second network element, the foregoing third network element, or the foregoing fourth network element, or may be a chip or a module in the first network element, the second network element, the third network element, or the fourth network element, and is configured to implement the methods in the foregoing embodiments. The communication apparatus 1400 includes a transceiver unit 1410 and a processing unit 1420. The following describes the transceiver unit 1410 and the processing unit 1420 by using examples.

The transceiver unit 1410 may include a sending unit and a receiving unit. The sending unit is configured to perform a sending action of the communication apparatus 1400, and the receiving unit is configured to perform a receiving action of the communication apparatus 1400. For ease of description, in this embodiment of this application, the sending unit and the receiving unit are combined into one transceiver unit. Unified descriptions are provided herein, and details are not described again below.

When the communication apparatus 1400 is the first network element, for example, the transceiver unit 1410 is configured to: receive first information from a terminal device, and obtain a capability and a capability invoking method of at least one object; and the processing unit 1420 is configured to: determine an information exchange method between the first network element and the at least one object based on the capability and the capability invoking method of the at least one object, and invoke the capability of the at least one object based on the information exchange method; or the transceiver unit 1410 is configured to: receive the first information from the terminal device, send second information to a third network element, and receive third information from a third network element; and the processing unit 1420 is configured to invoke the capability of the at least one object based on the information exchange method.

When the communication apparatus 1400 is the second network element, for example, the transceiver unit 1410 is configured to: receive a message for requesting a capability and a capability invoking method of at least one object, and send the capability and the capability invoking method of the at least one object based on an identifier of the at least one object.

When the communication apparatus 1400 is the third network element, for example, the transceiver unit 1410 is configured to: receive second information from a first network element, and obtain a capability and a capability invoking method of at least one object; the processing unit 1420 is configured to: determine an information exchange method between the first network element and the at least one object based on the capability and the capability invoking method of the at least one object; and the transceiver unit 1410 is further configured to send third information to the first network element.

When the communication apparatus 1400 is the fourth network element, for example, the transceiver unit 1410 is configured to receive a fourth message from a terminal device; the processing unit 1420 is configured to: establish a session between the terminal device and a first network element based on the fourth message; and the transceiver unit 1410 is further configured to send an identifier, a capability, and a capability invoking method of the terminal device and an identifier of the first network element to a second network element.

The foregoing content is merely used as an example for description. When the communication apparatus 1400 is at least one of the foregoing first network element, the foregoing second network element, the foregoing third network element, or the foregoing fourth network element, the communication apparatus 1400 is responsible for performing a method or a step related to at least one of the foregoing first network element, the foregoing second network element, the third network element, or the foregoing fourth network element in the foregoing method embodiments.

Optionally, the communication apparatus 1400 further includes a storage unit 1430. The storage unit 1430 is configured to store a program or code for performing the foregoing methods.

The apparatus embodiments shown in FIG. 13 and FIG. 14 are used for implementing the content described in FIG. 5 to FIG. 12. For specific execution steps and methods of the apparatuses shown in FIG. 13 and FIG. 14, refer to the content described in the foregoing method embodiments.

FIG. 15 is a block diagram of a communication apparatus 1500 according to an embodiment of this application. The communication apparatus 1500 is configured to implement at least one function of the foregoing first network element, the foregoing second network element, the foregoing third network element, or the foregoing fourth network element. The communication apparatus 1500 may be a chip in at least one of the first network element, the second network element, the third network element, or the fourth network element.

The communication apparatus 1500 includes an input/output interface 1520 and a processor 1510. The input/output interface 1520 may be an input/output circuit. The processor 1510 may be a signal processor, a chip, or another integrated circuit that can implement the methods in this application. The input/output interface 1520 is configured to input or output a signal or data.

For example, when the communication apparatus 1500 is the first network element, the input/output interface 1520 is configured to: receive first information from a terminal device, and obtain a capability and a capability invoking method of at least one object; and the processor 1510 is configured to: determine an information exchange method between the first network element and the at least one object based on the capability and the capability invoking method of the at least one object, and invoke the capability of the at least one object based on the information exchange method; or the input/output interface 1520 is configured to: receive the first information from the terminal device, send second information to a third network element, and receive third information from a third network element; and the processor 1510 is configured to invoke the capability of the at least one object based on the information exchange method.

For example, when the communication apparatus 1500 is the second network element, the input/output interface 1520 is configured to: receive a message for requesting a capability and a capability invoking method of at least one object, and send the capability and the capability invoking method of the at least one object based on an identifier of the at least one object.

For example, when the communication apparatus 1500 is the third network element, the input/output interface 1520 is configured to: receive second information from a first network element, and obtain a capability and a capability invoking method of at least one object; the processor 1510 is configured to: determine an information exchange method between the first network element and the at least one object based on the capability and the capability invoking method of the at least one object; and the input/output interface 1520 is further configured to send third information to the first network element.

For example, when the communication apparatus 1500 is the fourth network element, for example, the input/output interface 1520 is configured to receive a fourth message from a terminal device; the processor 1510 is configured to: establish a session between the terminal device and a first network element based on the fourth message; and the input/output interface 1520 is further configured to send an identifier, a capability, and a capability invoking method of the terminal device and an identifier of the first network element to a second network element.

In a possible implementation, the processor 1510 executes instructions stored in a memory, to implement a function implemented by at least one of the first network element, the second network element, the third network element, or the fourth network element.

Optionally, the communication apparatus 1500 further includes the memory.

Optionally, the processor and the memory are integrated together.

Optionally, the memory is outside the communication apparatus 1500.

In a possible implementation, the processor 1510 may be a logic circuit, and the processor 1510 inputs/outputs a message or signaling through the input/output interface 1520. The logic circuit may be a signal processor, a chip, or another integrated circuit that can implement the methods in embodiments of this application.

The foregoing descriptions of the communication apparatus 1500 are merely an example for description. The communication apparatus 1500 can be configured to perform the methods in the foregoing embodiments. For specific content, refer to the descriptions of the foregoing method embodiments. Details are not described herein again.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory, and the memory is configured to store a computer program or the code.

This application further provides a processor, configured to be coupled to a memory, and configured to perform a method and a function of at least one of the foregoing first network element, the foregoing second network element, the foregoing third network element, or the foregoing fourth network element in any one of the foregoing embodiments.

This application provides a computer program product including instructions. When the computer program product runs on a computer, the methods in the foregoing embodiments are implemented.

This application further provides a computer program. When the computer program is run on a computer, the methods in the foregoing embodiment are implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the foregoing described apparatus embodiment is merely an example. For example, division into the units is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate components may or may not be physically separate, and components displayed as units may or may not be physical units, in other words, may be located in one position, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the method embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network element, wherein the method comprises:
receiving first information from a terminal device, wherein the first information describes an intent;
obtaining a capability and a capability invoking method of at least one object, wherein the capability of the at least one object is related to the intent;
determining an information exchange method between the first network element and the at least one object based on the capability and the capability invoking method of the at least one object, wherein the information exchange method is for implementing the intent; and
invoking the capability of the at least one object based on the information exchange method.

2. The method according to claim 1, wherein the obtaining the capability and the capability invoking method of the at least one object comprises:
sending a first message to a second network element, wherein the first message is for requesting the capability and the capability invoking method of the at least one object, and the first message comprises an identifier of the at least one object; and
receiving the capability and the capability invoking method of the at least one object from the second network element.

3. A communication method, applied to a first network element, wherein the method comprises:
receiving first information from a terminal device, wherein the first information describes an intent;
sending second information to a third network element, wherein the second information describes the intent;
receiving third information from the third network element, wherein the third information indicates an information exchange method between the first network element and at least one object, the information exchange method is for implementing the intent, and the information exchange method is determined based on a capability and a capability invoking method of the at least one object; and
invoking the capability of the at least one object based on the information exchange method.

4. The method according to claim 3, wherein the method further comprises:
updating a local intent knowledge base in the first network element based on the intent and the information exchange method, wherein the local intent knowledge base is for determining an information exchange method corresponding to an intent.

5. The method according to any one of claims 1 to 4, wherein the invoking the capability of the at least one object based on the information exchange method comprises:
sending, to at least a part of the at least one object, information describing a sub-intent of the intent.

6. The method according to any one of claims 1 to 5, wherein the method further comprises:
sending a result of implementing the intent to the terminal device.

7. The method according to any one of claims 1 to 6, wherein before the receiving the first information from the terminal device, the method further comprises:
establishing a session with the terminal device via a fourth network element; and
the receiving the first information from the terminal device comprises:
receiving the first information via the session.

8. The method according to any one of claims 1 to 7, wherein the at least one object comprises at least one of the following: a network function NF, a management function MF, an application function AF, a call application, an intelligent agent, or a terminal device.

9. A communication method, applied to a second network element and comprising:
receiving a message for requesting a capability and a capability invoking method of at least one object, wherein the message comprises an identifier of the at least one object; and
sending the capability and the capability invoking method of the at least one object based on the identifier of the at least one object.

10. The method according to claim 9, wherein before the receiving the message for requesting the capability and the capability invoking method of the at least one object, the method further comprises:
receiving the identifier, the capability, and the capability invoking method of the at least one object; and
storing a capability template of the at least one object, wherein a capability template of each of the at least one object comprises an identifier, a capability, and a capability invoking method of the object.

11. The method according to claim 10, wherein the method further comprises:
querying the capability template of the at least one object based on the identifier of the at least one object, to determine the capability and the capability invoking method of the at least one object.

12. The method according to claim 10 or 11, wherein before the receiving the identifier, the capability, and the capability invoking method of the at least one object, the method further comprises:
receiving a second message from a third network element, wherein the second message is for subscribing to a capability template of an object; and
after the storing the capability template of the at least one object, the method further comprises:
sending the capability template of the at least one object to the third network element.

13. The method according to any one of claims 9 to 12, wherein the method further comprises:
receiving an identifier, a capability, and a capability invoking method that are of a terminal device and an identifier of a first network element from a fourth network element, wherein the first network element has a session with the terminal device; and
storing a capability template of the terminal device, wherein the capability template of the terminal device comprises the identifier, the capability, and the capability invoking method that are of the terminal device and the identifier of the first network element; or
storing a capability template of the terminal device and the identifier of the first network element, wherein the capability template of the terminal device comprises the identifier, the capability, and the capability invoking method that are of the terminal device, and the capability template of the terminal device corresponds to the identifier of the first network element.

14. The method according to any one of claims 9 to 13, wherein the at least one object comprises at least one of the following: a network function NF, a management function MF, an application function AF, a call application, an intelligent agent, or a terminal device.

15. A communication method, applied to a third network element and comprising:
receiving second information from a first network element, wherein the second information describes an intent;
obtaining a capability and a capability invoking method of at least one object, wherein the capability of the at least one object is related to the intent;
determining an information exchange method between the first network element and the at least one object based on the capability and the capability invoking method of the at least one object, wherein the information exchange method is for implementing the intent; and
sending third information to the first network element, wherein the third information indicates the information exchange method.

16. The method according to claim 15, wherein the obtaining the capability and the capability invoking method of the at least one object comprises:
sending a third message to a second network element, wherein the third message is for requesting the capability and the capability invoking method of the at least one object, and the third message comprises an identifier of the at least one object; and
receiving the capability and the capability invoking method of the at least one object from the second network element.

17. The method according to claim 15 or 16, wherein the method further comprises:
sending a second message to the second network element, wherein the second message is for subscribing to a capability template of an object, and the capability template comprises an identifier of the object and a capability and a capability invoking method of the object;
receiving a capability template of one or more objects from the second network element; and
updating an intent knowledge base based on the capability template of the one or more objects, wherein the intent knowledge base is for determining an information exchange method corresponding to an intent.

18. The method according to any one of claims 15 to 17, wherein the at least one object comprises at least one of the following: a network function NF, a management function MF, an application function AF, a call application, an intelligent agent, or a terminal device.

19. A communication method, applied to a fourth network element and comprising:
receiving a fourth message from a terminal device, wherein the fourth message is for requesting to establish a session, and the fourth message comprises an identifier, a capability, and a capability invoking method that are of the terminal device;
establishing a session between the terminal device and a first network element based on the fourth message, wherein the first network element is configured to implement an intent through information exchange with at least one object; and
sending the identifier, the capability, and the capability invoking method that are of the terminal device and an identifier of the first network element to a second network element.

20. The method according to claim 19, wherein the session is for transmitting an intent and/or invoking the capability of the terminal device.

21. The method according to claim 19 or 20, wherein before the establishing the session between the terminal device and the first network element, the method further comprises:
selecting the first network element.

22. The method according to any one of claims 19 to 21, wherein after the establishing the session between the terminal device and the first network element, the method further comprises:
sending an address of the first network element to the terminal device.

23. The method according to claim 22, wherein before the sending the address of the first network element to the terminal device, the method further comprises:
receiving the address of the first network element from the first network element.

24. The method according to any one of claims 19 to 23, wherein the at least one object comprises at least one of the following: a network function NF, a management function MF, an application function AF, a call application, an intelligent agent, or a terminal device.

25. A communication apparatus, comprising
a unit configured to perform the method according to any one of claims 1 to 8; or
a unit configured to perform the method according to any one of claims 9 to 14; or
a unit configured to perform the method according to any one of claims 15 to 18; or
a unit configured to perform the method according to any one of claims 19 to 24.

26. A communication apparatus, comprising a processor, wherein the processor is configured to execute a computer program or instructions,
to cause the communication apparatus to perform the method according to any one of claims 1 to 8, or
to cause the communication apparatus to perform the method according to any one of claims 9 to 14, or
to cause the communication apparatus to perform the method according to any one of claims 15 to 18, or
to cause the communication apparatus to perform the method according to any one of claims 19 to 24.

27. The communication apparatus according to claim 26, wherein the communication apparatus further comprises a memory, and the memory is configured to store the computer program or the instructions.

28. A computer-readable storage medium, wherein the computer-readable storage medium stores a computer program or instructions, and when the computer program or the instructions are run on a computer,
the computer is caused to perform the method according to any one of claims 1 to 8, or
the computer is caused to perform the method according to any one of claims 9 to 14, or
the computer is caused to perform the method according to any one of claims 15 to 18, or
the computer is caused to perform the method according to any one of claims 19 to 24.

29. A computer program product, comprising instructions, wherein when the instructions are run on a computer,
the computer is caused to perform the method according to any one of claims 1 to 8, or
the computer is caused to perform the method according to any one of claims 9 to 14, or
the computer is caused to perform the method according to any one of claims 15 to 18, or
the computer is caused to perform the method according to any one of claims 19 to 24.

30. A communication system, comprising:
a communication apparatus configured to perform the method according to any one of claims 1 to 8; and
a communication apparatus configured to perform the method according to any one of claims 9 to 14.

31. The communication system according to claim 30, wherein the communication system further comprises:
a communication apparatus configured to perform the method according to any one of claims 15 to 18; and/or
a communication apparatus configured to perform the method according to any one of claims 19 to 24.
